# EUROPEAN PATENT APPLICATION

(11) **EP 4 283 948 A1**
(43) Date of publication of application: **29.11.2023**
(21) Application number: 22752106.9
(22) Date of filing: 21.01.2022
(51) Int. Cl.: H04L 45/741

(54) **PACKET FORWARDING METHOD, APPARATUS AND SYSTEM**

(30) Priority: 10.02.2021 CN 202110183983; 25.02.2021 CN 202110214002
(71) Applicant: Huawei Technologies Co., Ltd., Shenzhen, Guangdong 518129 (CN)
(72) Inventor: HU, Zhibo, Shenzhen, Guangdong 518129 (CN); DONG, Jie, Shenzhen, Guangdong 518129 (CN)
(74) Representative: Gill Jennings & Every LLP
(86) International application number: PCT/CN2022/073279
(87) International publication number: WO 2022/170944

(57) **Abstract**

This application provides a packet forwarding method, apparatus, and system, and belongs to the field of communication technologies. In a scheme provided in this application, a packet includes both a destination address and a behavior instruction, and at least two nodes in a packet forwarding system may identify the behavior instruction in the packet, and may forward the packet based on a first forwarding behavior indicated by the behavior instruction. Therefore, when a plurality of nodes in the packet forwarding system each need to perform a forwarding behavior on the packet, an SID does not need to be allocated to each node, but only the behavior instruction needs to be carried in the packet. The scheme provided in embodiments of this application effectively reduces a quantity of SIDs that need to be allocated in the system, and reduces complexity of packet forwarding.

## Description

This application claims priority to Chinese Patent Application No. 202110183983.7, filed on February 10, 2021 and entitled "METHOD FOR EXTENDING SRV6 PROGRAMMABILITY", and claims priority to Chinese Patent Application No. 202110214002.0, filed on February 25, 2021 and entitled "PACKET FORWARDING METHOD, APPARATUS, AND SYSTEM", which are incorporated herein by reference in their entireties.

### TECHNICAL FIELD

This application relates to the field of communication technologies, and in particular, to a packet forwarding method, apparatus, and system.

### BACKGROUND

SRv6 is a segment routing (segment routing) forwarding technology based on the internet protocol version 6 (internet protocol version 6, IPv6). To be compatible with a conventional IPv6 technology, a conventional IPv6 header is still used at an outermost layer of an SRv6 packet, and a newly defined segment routing header (segment routing header, SRH) is further inserted into the SRv6 packet. The SRH includes a segment list (segment list), and the segment list is used to carry a segment identifier (segment identification, SID) of each node in a packet forwarding path. The SID is a special IPv6 address, and has both a routing capability of a common IPv6 address and an SRv6-specific behavior capability.

Each node supporting the SRv6 (an SRv6 node for short) in a network maintains an SID table, and the SID table includes a plurality of SIDs. After receiving a packet, the SRv6 node searches the SID table based on a destination address (destination address DA) field in the packet. If a value of the DA field matches an SID in the SID table, the SRv6 node performs a behavior (behavior) corresponding to the SID. For example, the behavior may be updating the value of the DA field based on an SID in the segment list. If the value of the DA field does not match any SID in the SID table, the SRv6 node performs a common routing forwarding action.

In some scenarios, each node in the network needs to perform a specific operation on a received packet, for example, perform encrypted forwarding processing on the received packet. Based on a conventional SRv6 network programming method, each node in the network needs to define a specific SID, and the specific SID indicates to perform the encrypted forwarding operation. Then, an SRH needs to be inserted into the packet, and a segment list of the SRH records the specific SID of each node in a forwarding path of the packet. Correspondingly, a node that receives the packet may further perform encrypted forwarding processing on the packet based on the specific SID. In the foregoing packet forwarding manner, because each node in the network needs to define the specific SID, packet forwarding complexity is high, and packet forwarding efficiency is low.

### SUMMAR

This application provides a packet forwarding method, apparatus, and system, to resolve a technical problem of high complexity of packet forwarding caused by separately defining an SID for each node.

According to a first aspect, a packet forwarding method is provided, applied to a first node in a packet forwarding system. The method includes: receiving a packet, where the packet includes a destination address and a behavior instruction; and forwarding, based on a first forwarding behavior indicated by the behavior instruction, the packet to a node indicated by the destination address, where the packet forwarding system includes a plurality of nodes, at least two of the plurality of nodes can perform the first forwarding behavior on the packet based on the behavior instruction in the packet, and the first node belongs to the at least two nodes.

The first node may be an intermediate node of the packet forwarding system. Based on the method provided in this application, when the plurality of nodes in the packet forwarding system each need to perform a forwarding behavior, an SID does not need to be allocated to each node, but only the behavior instruction needs to be carried in a packet. The plurality of nodes in the packet forwarding system perform a same forwarding behavior on the packet based on the behavior instruction carried in the packet. Therefore, a quantity of SIDs that need to be allocated in the system is effectively reduced, and complexity of packet forwarding is reduced.

Optionally, the behavior instruction may include a first function field, where the first function field indicates the first forwarding behavior. Different first forwarding behaviors may be programmed as different values of the first function field. Therefore, when values of the first function field are different values, different first forwarding behaviors may be indicated. This effectively improves flexibility of packet forwarding.

Optionally, the behavior instruction includes a first function field, the destination address includes a second function field; the first function field indicates the first forwarding behavior, and the second function field indicates a second forwarding behavior; and a process in which the first node forwards, based on the first forwarding behavior indicated by the behavior instruction, the packet to a node indicated by the destination address may include: forwarding, based on the first forwarding behavior indicated by the first function field and the second forwarding behavior indicated by the second function field, the packet to the node indicated by the destination address.

In a scenario in which the destination address also includes a function field, the first node may jointly determine a to-be-performed forwarding behavior based on two function fields. In this way, the first node not only ensures reliable forwarding of the packet, but also may be effectively compatible with a forwarding scheme of a conventional SRv6 system.

Optionally, the behavior instruction further includes at least one of a locator field and a parameter field, where the locator field indicates an aggregation address of the packet forwarding system, and the parameter field indicates an execution parameter of the first forwarding behavior.

When values of the parameter field are different values, different execution parameters may be indicated. Therefore, the value of the parameter field may be adjusted, to indicate at least two nodes in the packet forwarding system to perform the first forwarding behavior based on different execution parameters. This effectively improves flexibility of packet forwarding.

Optionally, the first forwarding behavior may include at least one of the following behaviors: encrypted forwarding; slice resource forwarding based on a specified network slice; forwarding based on an allocated network resource; and forwarding based on a specified routing table.

According to the method provided in this application, different behavior instructions may indicate different types of first forwarding behaviors. This effectively improves flexibility of packet forwarding processing.

Optionally, the packet is an SR packet based on IPv6, to be specific, the packet is an SRv6 packet, and the behavior instruction is carried in an IPv6 header, an SRH, or a hop-by-hop option header of the packet; or the packet is an SR packet based on multi-protocol label switching (multi-protocol label switching, MPLS), to be specific, the packet is an MPLS SR packet, and a label stack of the packet carries the behavior instruction.

In the method provided in this application, the behavior instruction may be encapsulated at different locations of the packet, and an encapsulation location of the behavior instruction is flexible. In a scenario in which the behavior instruction is encapsulated in the IPv6 header or the hop-by-hop option header of the packet, each node in the forwarding path of the packet may perform the first forwarding behavior based on the behavior instruction, so that the first forwarding behavior may be performed hop by hop. For a scenario in which the behavior instruction is encapsulated in the SRH of the packet, only a node defined in the segment list of the SRH performs the first forwarding behavior based on the behavior instruction, so that the first forwarding behavior may be performed segment by segment (segment).

Optionally, the SRH includes a tag field, and the tag field may carry the behavior instruction. For example, several bits of the tag field may be used to carry the behavior instruction, or the tag field may be directly used to carry the behavior instruction.

Optionally, the SRH includes a flags field and a segment list, and the segment list includes a plurality of identification fields; and the last identification field in the segment list carries the behavior instruction, and the flags field indicates that a value of the last identification field includes the behavior instruction. Therefore, it may be convenient for the first node to obtain the behavior instruction from the last identification field based on an indication of the flags field, and query the forwarding table based on the behavior instruction and perform the first forwarding behavior.

Optionally, the at least two nodes each store a forwarding table, and the forwarding table records a correspondence between the behavior instruction and the first forwarding behavior; and the method may further include: determining, based on the forwarding table, a first forwarding behavior indicated by the behavior instruction.

The first node may search the forwarding table by using the behavior instruction as an index, to accurately determine the first forwarding behavior. For example, the first node may search the forwarding table by using the value of the first function field in the behavior instruction as an index, to determine the first forwarding behavior. If the behavior instruction further includes a parameter field, the first node may further search the forwarding table by using a value of the parameter field as an index, to further determine an execution parameter of the first forwarding behavior.

Optionally, the method may further include: generating the forwarding table based on obtained configuration information, where the configuration information includes the behavior instruction and the first forwarding behavior.

The configuration information may be manually configured in the first node by an operation and maintenance personnel, or may be delivered by a controller, or may be sent by another node in the packet forwarding system. In addition, if the behavior instruction includes the first function field and the parameter field, the configuration information further includes the execution parameter of the first forwarding behavior. Correspondingly, the forwarding table may further record a correspondence between the parameter field and the execution parameter.

Optionally, a length of the behavior instruction may be less than 128 bits. For example, a length of the behavior instruction may be 8 bits or 32 bits.

According to a second aspect, a packet forwarding method is provided, applied to a second node in a packet forwarding system. The method includes: encapsulating a behavior instruction into a packet, where the packet includes a destination address field; and sending the packet, so that at least two nodes in the packet forwarding system forward, based on a first forwarding behavior indicated by the behavior instruction in the packet, the packet to a node indicated by a value of the destination address field.

The second node may be an ingress node of the packet forwarding system. Because the behavior instruction encapsulated by the second node in the packet may be identified by the at least two nodes and perform a same first forwarding behavior, when a plurality of nodes in the packet forwarding system each need to perform a forwarding behavior, an SID does not need to be allocated to each node. Therefore, a quantity of SIDs that need to be allocated in the system is effectively reduced, and complexity of packet forwarding is reduced.

Optionally, the behavior instruction includes a first function field, where the first function field indicates the first forwarding behavior.

Optionally, the behavior instruction includes a first function field, the packet further includes a segment list corresponding to a forwarding path of the packet, the segment list includes a plurality of segment identifiers, each of the plurality of segment identifiers further includes a second function field, the first function field indicates the first forwarding behavior, and the second function field indicates a second forwarding behavior; and that at least two nodes in the packet forwarding system forward, based on a first forwarding behavior indicated by the behavior instruction in the packet, the packet to a node indicated by a value of the destination address field includes: the at least two nodes in the packet forwarding system forward, based on the first forwarding behavior indicated by the first function field and the second forwarding behavior indicated by the second function field, the packet to the node indicated by the value of the destination address field.

Optionally, the behavior instruction further includes at least one of a locator field and a parameter field, where the locator field indicates an aggregation address of the packet forwarding system, and the parameter field indicates an execution parameter of the first forwarding behavior.

Optionally, the first forwarding behavior may include at least one of the following behaviors: encrypted forwarding; slice resource forwarding based on a specified network slice; forwarding based on an allocated network resource; and forwarding based on a specified routing table.

Optionally, the packet is an SRv6 packet, and the behavior instruction is carried in an IPv6 header, an SRH, or a hop-by-hop option header of the packet; or the packet is an MPLS SR packet, and a label stack of the packet carries the behavior instruction.

Optionally, the SRH includes a tag field, and the tag field may carry the behavior instruction.

Optionally, the SRH includes a flags field and a segment list, and the segment list includes a plurality of identification fields; and the last identification field in the segment list carries the behavior instruction, and the flags field indicates that a value of the last identification field includes the behavior instruction.

Optionally, a length of the behavior instruction is less than 128 bits. Because the length of the behavior instruction is short, flexible encapsulation at different locations of the packet may be facilitated. This improves flexibility of encapsulation of the behavior instruction.

According to a third aspect, a packet forwarding method is provided, applied to a third node in a packet forwarding system. The method including: sending configuration information to at least one node in the packet forwarding system, where the configuration information includes a behavior instruction and a first forwarding behavior corresponding to the behavior instruction, and the configuration information is used by at least two nodes in the packet forwarding system to generate a forwarding table, and perform, based on the forwarding table, the first forwarding behavior on a received packet into which the behavior instruction is encapsulated, where the third node belongs to the at least two nodes.

By sending the configuration information to another node, the third node may ensure that the at least two nodes in the packet forwarding system may generate the forwarding table based on the configuration information. Further, when receiving the packet into which the behavior instruction is encapsulated, the at least two nodes may identify semantics of the behavior instruction in the packet based on the forwarding table, and perform a corresponding first forwarding behavior on the packet.

Optionally, the behavior instruction includes a first function field, where the first function field indicates the first forwarding behavior.

Optionally, the behavior instruction includes a first function field, the packet into which the behavior instruction is encapsulated further includes a segment list corresponding to a forwarding path of the packet, the segment list includes a plurality of segment identifiers, each of the plurality of segment identifiers further includes a second function field, the first function field indicates the first forwarding behavior, and the second function field indicates a second forwarding behavior; and the at least two nodes can generate the forwarding table based on the configuration information and the second function field, and perform, based on the forwarding table, the first forwarding behavior and the second forwarding behavior on the received packet into which the behavior instruction is encapsulated.

Optionally, the behavior instruction further includes at least one of a locator field and a parameter field, where the locator field indicates an aggregation address of the packet forwarding system, and the parameter field indicates an execution parameter of the first forwarding behavior.

Optionally, the first forwarding behavior may include at least one of the following behaviors: encrypted forwarding; slice resource forwarding based on a specified network slice; forwarding based on an allocated network resource; and forwarding based on a specified routing table.

According to a fourth aspect, a packet forwarding method is provided, applied to a first node in a packet forwarding system. The method includes: receiving configuration information, where the configuration information includes a behavior instruction and a first forwarding behavior corresponding to the behavior instruction; and generating a forwarding table based on the configuration information, to perform, based on the forwarding table, the first forwarding behavior on a received packet into which the behavior instruction is encapsulated, where the packet forwarding system includes a plurality of nodes, at least two of the plurality of nodes can generate the forwarding table based on the configuration information, and the first node belongs to the at least two nodes.

The first node generates the forwarding table based on the received configuration information, so that when receiving a packet into which the behavior instruction is encapsulated, the first node may identify semantics of the behavior instruction based on the forwarding table, and perform a corresponding first forwarding behavior on the packet.

Optionally, the behavior instruction includes a first function field, where the first function field indicates the first forwarding behavior.

Optionally, the behavior instruction includes a first function field, the packet into which the behavior instruction is encapsulated further includes a segment list corresponding to a forwarding path of the packet, the segment list includes a plurality of segment identifiers, each of the plurality of segment identifiers further includes a second function field, the first function field indicates the first forwarding behavior, and the second function field indicates a second forwarding behavior; and the generating a forwarding table based on the configuration information, to perform, based on the forwarding table, the first forwarding behavior on a received packet into which the behavior instruction is encapsulated includes: generating the forwarding table based on the configuration information and the second function field, to perform, based on the forwarding table, the first forwarding behavior and the second forwarding behavior, on the received packet into which the behavior instruction is encapsulated.

Optionally, the behavior instruction further includes at least one of a locator field and a parameter field, where the locator field indicates an aggregation address of the packet forwarding system, and the parameter field indicates an execution parameter of the first forwarding behavior.

Optionally, the first forwarding behavior may include at least one of the following behaviors: encrypted forwarding; slice resource forwarding based on a specified network slice; forwarding based on an allocated network resource; and forwarding based on a specified routing table.

According to a fifth aspect, a packet forwarding apparatus is provided, where the apparatus is used in a first node in a packet forwarding system; and the apparatus includes at least one module, and the at least one module may be configured to implement the packet forwarding method applied to the first node provided in the first aspect.

According to a sixth aspect, a packet forwarding apparatus is provided, where the apparatus is used in a second node in a packet forwarding system; and the apparatus includes at least one module, and the at least one module may be configured to implement the packet forwarding method applied to the second node provided in the second aspect.

According to a seventh aspect, a packet forwarding apparatus is provided, where the apparatus is used in a third node in a packet forwarding system; and the apparatus includes at least one module, and the at least one module may be configured to implement the packet forwarding method applied to the third node provided in the third aspect.

According to an eighth aspect, a packet forwarding apparatus is provided, where the apparatus is used in a first node in a packet forwarding system; and the apparatus includes at least one module, and the at least one module may be configured to implement the packet forwarding method applied to the first node provided in the fourth aspect.

According to a ninth aspect, a packet forwarding apparatus is provided, and the packet forwarding apparatus may include: a memory, a processor, and a computer program that is stored in the memory and executable on the processor, where when executing the computer program, the processor implements the packet forwarding method provided in any one of the first aspect to the fourth aspect.

According to a tenth aspect, a packet forwarding apparatus is provided, and the packet forwarding apparatus may include: a main control board and an interface board, where the main control board and the interface board may be configured to implement the packet forwarding method provided in any one of the first aspect to the fourth aspect.

According to a tenth aspect, a network device is provided, where the network device is a first node in a packet forwarding system, and the network device includes: a main control board and an interface board. The main control board includes a first processor and a first memory. The interface board includes: a second processor, a second memory, and an interface card. The main control board is coupled to the interface board.

The second memory may be configured to store program code, and the second processor is configured to invoke the program code in the second memory, to trigger the interface card to perform the following operations: receiving a packet, where the packet includes a destination address and a behavior instruction; and forwarding, based on a first forwarding behavior indicated by the behavior instruction, the packet to a node indicated by the destination address, where the packet forwarding system includes a plurality of nodes, at least two of the plurality of nodes can perform the first forwarding behavior on the packet based on the behavior instruction in the packet, and the first node belongs to the at least two nodes.

In a possible implementation, an inter-process communication protocol (inter-process communication, IPC) channel is established between the main control board and the interface board, and the main control board and the interface board communicate with each other through the IPC channel.

According to an eleventh aspect, a network device is provided, where the network device is a second node in a packet forwarding system, and the network device includes: a main control board and an interface board. The main control board includes a first processor and a first memory. The interface board includes: a second processor, a second memory, and an interface card. The main control board is coupled to the interface board.

The first memory may be configured to store program code, and the first processor is configured to invoke the program code in the first memory to perform the following operation: encapsulating a behavior instruction into a packet, where the packet includes a destination address field.

The second memory may be configured to store program code, and the second processor is configured to invoke the program code in the second memory, to trigger the interface card to perform the following operations: sending the packet, so that at least two nodes in the packet forwarding system forward, based on a first forwarding behavior indicated by the behavior instruction in the packet, the packet to a node indicated by a value of the destination address field.

In a possible implementation, an IPC channel is established between the main control board and the interface board, and the main control board and the interface board communicate with each other through the IPC channel.

According to a twelfth aspect, a network device is provided, where the network device is a third node in a packet forwarding system, and the network device includes: a main control board and an interface board. The main control board includes a first processor and a first memory. The interface board includes: a second processor, a second memory, and an interface card. The main control board is coupled to the interface board.

The second memory may be configured to store program code, and the second processor is configured to invoke the program code in the second memory, to trigger the interface card to perform the following operations: sending configuration information to at least one node in the packet forwarding system, where the configuration information includes a behavior instruction and a first forwarding behavior corresponding to the behavior instruction, and the configuration information is used by at least two nodes in the packet forwarding system to generate a forwarding table, and perform, based on the forwarding table, the first forwarding behavior on a received packet into which the behavior instruction is encapsulated, where the third node belongs to the at least two nodes.

In a possible implementation, an IPC channel is established between the main control board and the interface board, and the main control board and the interface board communicate with each other through the IPC channel.

According to a thirteenth aspect, a network device is provided, where the network device is a first node in a packet forwarding system, and the network device includes: a main control board and an interface board. The main control board includes a first processor and a first memory. The interface board includes: a second processor, a second memory, and an interface card. The main control board is coupled to the interface board.

The first memory may be configured to store program code, and the first processor is configured to invoke the program code in the first memory to perform the following operation: generating a forwarding table based on the configuration information, to perform, based on the forwarding table, the first forwarding behavior on a received packet into which the behavior instruction is encapsulated, where the packet forwarding system includes a plurality of nodes, at least two of the plurality of nodes can generate the forwarding table based on the configuration information, and the first node belongs to the at least two nodes.

The second memory may be configured to store program code, and the second processor is configured to invoke the program code in the second memory, to trigger the interface card to perform the following operations: receiving configuration information, where the configuration information includes a behavior instruction and a first forwarding behavior corresponding to the behavior instruction.

In a possible implementation, an IPC channel is established between the main control board and the interface board, and the main control board and the interface board communicate with each other through the IPC channel.

According to a fourteenth aspect, a computer-readable storage medium is provided, where the computer-readable storage medium stores instructions, and the instructions are performed by a processor to implement the packet forwarding method provided in any one of the first aspect to the fourth aspect.

According to a fifteenth aspect, a computer program product including instructions is provided. When the computer program product is run on a computer, the computer is enabled to perform the packet forwarding method provided in any one of the first aspect to the fourth aspect.

According to a sixteenth aspect, a packet forwarding system is provided, where the packet forwarding system includes: a plurality of nodes, where at least two of the plurality of nodes include the apparatus provided in the fifth aspect, and at least one of the plurality of nodes includes the apparatus provided in the sixth aspect.

According to a seventeenth aspect, a packet forwarding system is provided, where the packet forwarding system includes: a plurality of nodes, where at least one of the plurality of nodes may include the apparatus provided in the seventh aspect, and at least one of the plurality of nodes may include the apparatus provided in the eighth aspect.

According to an eighteenth aspect, a chip is provided. The chip may be configured to implement the packet forwarding method provided in any one of the first aspect to the fourth aspect.

In conclusion, this application provides a packet forwarding method, device, and system. A packet includes both a destination address and a behavior instruction, and at least two nodes in a packet forwarding system may identify the behavior instruction in the packet, and may forward the packet based on a first forwarding behavior indicated by the behavior instruction. Therefore, when a plurality of nodes in the packet forwarding system each need to perform a forwarding behavior, an SID does not need to be allocated to each node, but only the behavior instruction needs to be carried in a packet. The method provided in embodiments of this application effectively reduces a quantity of SIDs that need to be allocated in the system, and reduces complexity of packet forwarding.

### BRIEF DESCRIPTION OF DRAWINGS

FIG. 1 is a schematic diagram of a structure of a packet forwarding system according to an embodiment of this application;
FIG. 2 is a schematic diagram of a structure of an SRv6 packet according to an embodiment of this application;
FIG. 3 is a schematic diagram of a structure of another packet forwarding system according to an embodiment of this application;
FIG. 4 is a flowchart of a packet forwarding method according to an embodiment of this application;
FIG. 5 is a flowchart of another packet forwarding method according to an embodiment of this application;
FIG. 6 is a schematic diagram of a data structure of a behavior instruction according to an embodiment of this application;
FIG. 7 is a schematic diagram of sending configuration information according to an embodiment of this application;
FIG. 8 is a schematic diagram of packet forwarding according to an embodiment of this application;
FIG. 9 is a schematic diagram of a structure of another SRv6 packet according to an embodiment of this application;
FIG. 10 is a schematic diagram of a structure of still another SRv6 packet according to an embodiment of this application;
FIG. 11 is a schematic diagram of a structure of a label stack in an MPLS SR packet according to an embodiment of this application;
FIG. 12 is a schematic diagram of a structure of a packet forwarding apparatus according to an embodiment of this application;
FIG. 13 is a schematic diagram of a structure of another packet forwarding apparatus according to an embodiment of this application;
FIG. 14 is a schematic diagram of a structure of still another packet forwarding apparatus according to an embodiment of this application;
FIG. 15 is a schematic diagram of a structure of yet another packet forwarding apparatus according to an embodiment of this application;
FIG. 16 is a schematic diagram of a structure of yet another packet forwarding apparatus according to an embodiment of this application; and
FIG. 17 is a schematic diagram of a structure of yet another packet forwarding apparatus according to an embodiment of this application.

### DESCRIPTION OF EMBODIMENTS

The following describes in detail a packet forwarding method, apparatus, and system provided in embodiments of this application with reference to the accompanying drawings.

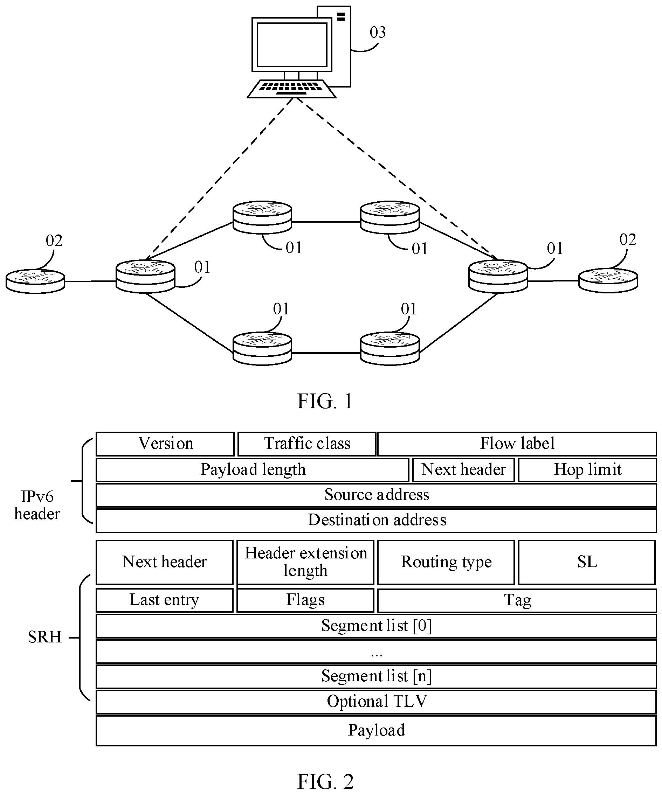

FIG. 1 is a schematic diagram of a structure of a packet forwarding system according to an embodiment of this application. As shown in FIG. 1, the packet forwarding system may include a plurality of nodes 01, and a communication connection is established between the plurality of nodes 01. Each node 01 may be a device that has a packet forwarding function, such as a router or a switch, and each node 01 may also be referred to as a network device.

For example, the node 01 may be a provider (provider, P) device or a provider edge (provider edge, PE) device. Correspondingly, as shown in FIG. 1, the packet forwarding system may further include a customer edge (customer edge, CE) device 02 connected to the PE device. The CE device 02 is connected to a user terminal, and is configured to provide an access service for a user.

Referring to FIG. 1, optionally, the packet forwarding system may further include a controller 03. The controller 03 is connected to at least one node 01, and is configured to manage and control the node 01 connected to the controller 03. Optionally, the controller 03 may be a network controller.

In embodiments of this application, the packet forwarding system may be an SRv6 system. FIG. 2 is a schematic diagram of a structure of an SRv6 packet according to an embodiment of this application. As shown in FIG. 2, the SRv6 packet includes: an IPv6 header, an SRH, and a payload (payload). The IPv6 header includes the following fields: a version (version), a traffic class (traffic class, TC), a flow label (flow label), a payload length (payload length), a next header (next header), a hop limit (hop limit), a source address (source address, SA), and a DA.

The SRH includes the following fields: a next header field a header extension length (Hdr Ext Len) field, a routing type (routing type) field, a segments left (segments left, SL) field, a last entry field, a flags (flags) field, a tag (tag) field, a segment list field, and an optional TLV field. The segment list includes (n+1) identification fields (n may be an integer greater than or equal to 1) in total from a segment list [0] to a segment list [n]. Each identification field is used to carry an SID of a node in a packet forwarding path. The SID may be an IPv6 address of the node. The SL field indicates a quantity of intermediate nodes that still need to be accessed before reaching a destination node. In a packet forwarding process, a node 01 may update a DA of a packet based on an SID indicated by the SL field.

It may be understood that content in the SRH is equivalent to a computer program, the segment list [0] to the segment list [n] are equivalent to a plurality of instructions in the computer program, and a first to-be-performed instruction in the computer program is the segment list [n]. The SL in the SRH is equivalent to a pointer to the computer program. The computer program always points to the instruction currently being performed. Before packet forwarding, the SL may be initialized to n. Each time an instruction is performed, the SL may be decreased by 1, to be specific, SL-- is performed, so that the SL points to a next to-be-performed instruction. In the foregoing manner, end-to-end packet forwarding may be implemented.

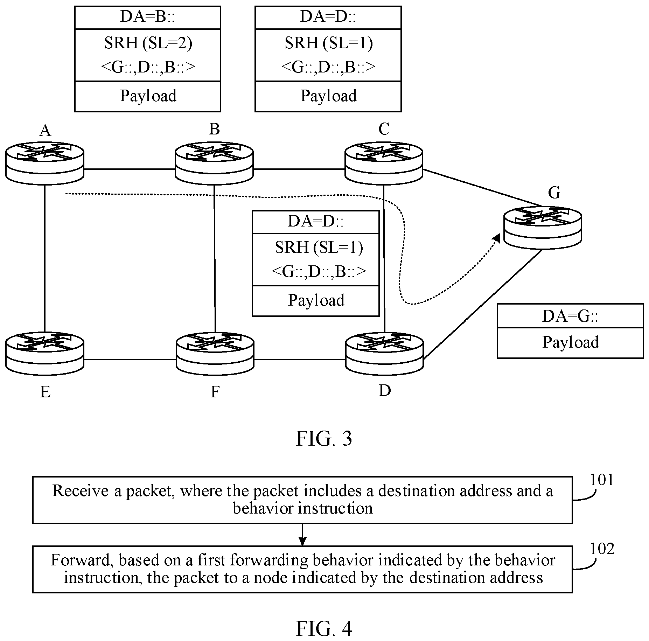

For example, referring to FIG. 3, it is assumed that a forwarding path of an SRv6 packet is: node A→node B→node C→node D→node G. The node A, the node B, the node D, and the node G all support an SRv6 technology, but the node C does not support the SRv6 technology. As an ingress (ingress) node, the node A may insert an SRH into the SRv6 packet. A segment list <G::, D::, B::> is encapsulated into the SRH. G:: is an SID of the node G, D:: is an SID of the node D, and B:: is an SID of the node B. Before packet forwarding, the node A may initialize an SL to 2. Then, the node A may copy an SID in the segment list indicated by the SL, namely, B:: in a segment list [2], to a DA in an IPv6 header. Then, the node A may query a routing table based on the DA in the IPv6 header, and forward the SRv6 packet to the node B.

After receiving the SRv6 packet, the node B searches a local SID table based on the DA in the IPv6 header. Because the DA may hit the local SID table of the node B, the node B may reduce the SL by 1, and copy the SID in the segment list indicated by the updated SL, namely, D:: in a segment list [1], to the DAin the IPv6 header. Then, the node B may forward the SRv6 packet to the node C based on the DA in the IPv6 header.

After the node C receives the SRv6 packet, because the node C does not support the SRv6 technology, the node C does not need to process the SRH, but may directly query the routing table based on the DA in the IPv6 header, and forward the SRv6 packet to the node D.

After receiving the SRv6 packet, the node D searches the local SID table based on the DA in the IPv6 header. Because the DA may hit the local SID table of the node D, the node D may reduce the SL by 1, and copy the SID in the segment list indicated by the updated SL, namely, G:: in a segment list [0], to the DA in the IPv6 header. Because the updated SL is 0, the node D may pop up the SRH, and forward the SRv6 packet that pops up the SRH to the node G.

It may be understood that in embodiments of this application, the packet forwarding system may alternatively be an SR system based on the MPLS, and a packet forwarded in the system is an MPLS SR packet. A label stack is encapsulated into the MPLS SR packet, and the label stack includes an SID of each node in a forwarding path of the packet. The SID of each node is an MPLS label of the node.

Embodiments of this application provide a packet forwarding method. The method may be applied to a first node in a packet forwarding system. The first node may be any node 01 in the system shown in FIG. 1 or FIG. 3. Referring to FIG. 4, the method includes the following steps.

Step 101. Receive a packet, where the packet includes a destination address and a behavior instruction.

The first node may receive a packet sent by another node in the packet forwarding system. The packet includes both the destination address of the packet and the behavior instruction. The behavior instruction may indicate a first forwarding behavior.

Step 102. Forward, based on a first forwarding behavior indicated by the behavior instruction, the packet to a node indicated by the destination address.

The first node may determine the first forwarding behavior based on the behavior instruction, and forward, based on the first forwarding behavior, the packet to the node indicated by the destination address.

In embodiments of this application, the packet forwarding system includes a plurality of nodes, at least two of the plurality of nodes may perform the first forwarding behavior on the packet based on a behavior identifier in the packet, and the first node belongs to the at least two nodes. In other words, the at least two nodes in the packet forwarding system may perform a same first forwarding behavior on the packet based on a behavior instruction in the same packet.

Optionally, the first forwarding behavior may include at least one of the following behaviors: encrypted forwarding; slice resource forwarding based on a specified network slice; forwarding based on an allocated network resource; and forwarding based on a specified routing table. The encrypted forwarding may be media access control security (media access control security, MACsec) encrypted forwarding. The network resource may include at least: a bandwidth resource of an interface that forwards the packet.

Optionally, the behavior instruction may also be referred to as a behavior identifier. In addition, because the behavior instruction may be identified and performed by at least two nodes in the packet forwarding system, the behavior instruction may also be referred to as a global SID (global SID, GSID).

In conclusion, embodiments of this application provide a packet forwarding method. The packet includes both a destination address and a behavior instruction, and at least two nodes in the packet forwarding system may identify the behavior instruction in the packet, and may forward the packet based on a first forwarding behavior indicated by the behavior instruction. Therefore, when a plurality of nodes in the packet forwarding system each need to perform a forwarding behavior, an SID does not need to be allocated to each node, but only the behavior instruction needs to be carried in a packet. The method provided in embodiments of this application effectively reduces a quantity of SIDs that need to be allocated in the system, and reduces complexity of packet forwarding.

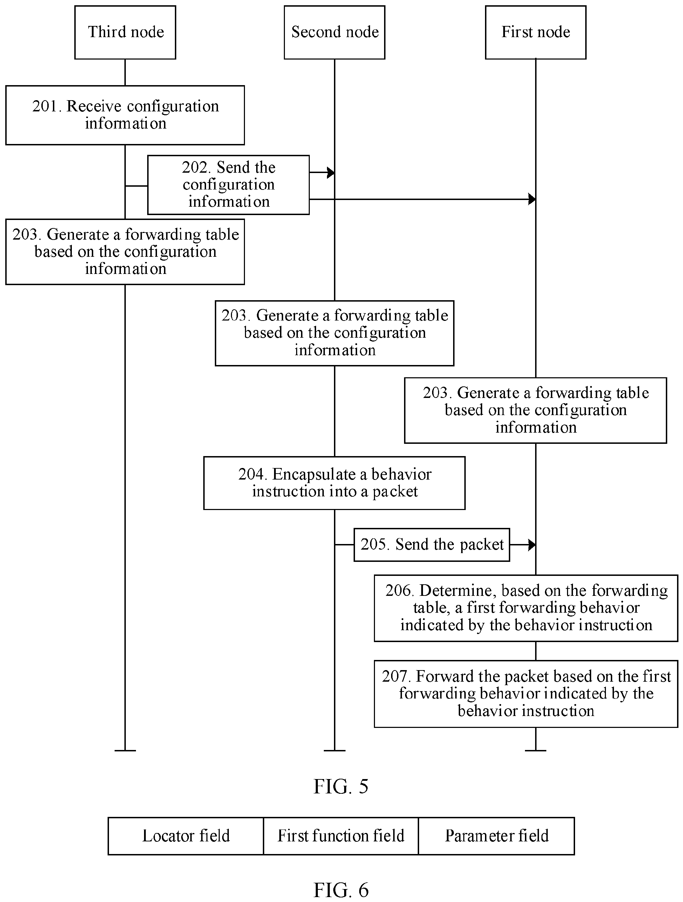

Embodiments of this application provide another packet forwarding method. The method may be applied to the packet forwarding system shown in FIG. 1 or FIG. 3. Referring to FIG. 5, the method includes the following steps.

Step 201. A third node receives configuration information.

The third node may be any node 01 in a packet forwarding system. The third node may receive configuration information manually configured by an operation and maintenance personnel. Alternatively, in a scenario in which the packet forwarding system further includes a controller 03, the third node 01 may further receive configuration information delivered by the controller 03.

The configuration information may include a behavior instruction and a first forwarding behavior corresponding to the behavior instruction. Optionally, the first forwarding behavior may include at least one of the following behaviors: encrypted forwarding; slice resource forwarding based on a specified network slice; forwarding based on an allocated network resource; and forwarding based on a specified routing table. The encrypted forwarding may be MACsec encrypted forwarding. The network resource may include at least: a bandwidth resource of an interface that forwards the packet. It may be understood that the first forwarding behavior listed above is merely a part of examples, and a type of the first forwarding behavior is not limited in embodiments of this application.

It may be learned from the foregoing example of the first forwarding behavior that the behavior instruction has at least one of the following functions: 1. The behavior instruction may indicate to perform encrypted forwarding on a packet. 2. The behavior instruction is associated with one network slice, and may indicate to forward the packet based on a slice resource of the associated network slice. 3. The behavior instruction is associated with an action of allocating a network resource (for example, a bandwidth), and may indicate to reserve a specified network resource on a forwarding interface of the packet. 4. The behavior instruction is associated with a specified routing table, and may indicate to query the specified routing table to forward the packet. To be specific, a node in the packet forwarding system may store a plurality of routing tables, and may select the specified routing table to forward the packet under an indication of the behavior instruction.

FIG. 6 is a schematic diagram of a data structure of a behavior instruction according to an embodiment of this application. As shown in FIG. 6, the behavior instruction includes a first function (function) field. The first function field may indicate the first forwarding behavior, and the first forwarding behavior may be a behavior in an SRv6 system. For related explanation about the function and behavior, refer to the following draft: draft-ietf-spring-srv6-network-programming-28. Related content in the draft may be incorporated in embodiments of this application by reference. When values of the first function field are different values, different first forwarding behaviors may be indicated. For example, when the value of the first function field is 100, encrypted forwarding may be indicated; when the value of the first function field is 200, slice resource forwarding based on a specified network slice may be indicated; when the value of the first function field is 300, forwarding based on an allocated network resource may be indicated; and when the value of the first function field is 400, forwarding based on a specified routing table may be indicated.

In embodiments of this application, the value of the first function field may be adjusted to indicate at least two nodes in a packet forwarding system to perform different first forwarding behaviors. This effectively improves flexibility of packet forwarding processing.

Optionally, as shown in FIG. 6, the behavior instruction may further include at least one of a locator (locator) field and a parameter (arguments, Args) field. For example, the behavior instruction shown in FIG. 6 includes the locator field and the parameter field. The locator field indicates an aggregation address of the packet forwarding system. The parameter field indicates an execution parameter of the first forwarding behavior. For example, if the first forwarding behavior is forwarding based on the slice resource of the specified network slice, the execution parameter may include an identifier (Slice ID) of the specified network slice. If the first forwarding behavior is forwarding based on the allocated network resource, the execution parameter may include a resource amount of the allocated network resource. If the first forwarding behavior is forwarding based on the specified routing table, the execution parameter may include an identifier of the specified routing table. If the first forwarding behavior is encrypted forwarding, the behavior instruction may not need to include the parameter field, to be specific, the execution parameter does not need to be configured for a behavior of encrypted forwarding.

For a scenario in which the first forwarding behavior includes a plurality of behaviors, the execution parameter may include an execution parameter of at least one of the plurality of behaviors. For example, if the first forwarding behavior includes encrypted forwarding and forwarding based on the specified routing table, the execution parameter may include the identifier of the specified routing table. If the first forwarding behavior includes: forwarding based on the allocated network resource and forwarding based on the specified routing table, the execution parameter may include: an amount of allocated network resources, and the identifier of the specified routing table.

It may be understood that when values of the parameter field are different values, different execution parameters may be indicated. For example, it is assumed that the value of the first function field indicates slice resource forwarding based on the specified network slice, when the value of the parameter field is 01, an identifier of a network slice 1 may be indicated. When the value of the parameter field is 02, an identifier of a network slice 2 may be indicated.

In embodiments of this application, the value of the parameter field may be further adjusted, to indicate at least two nodes in the packet forwarding system to perform the first forwarding behavior based on different execution parameters. This effectively improves flexibility of packet forwarding processing.

It may be further understood that in a scenario in which the behavior instruction further includes the parameter field, the configuration information may further include an execution parameter corresponding to the parameter field. For a scenario in which the behavior instruction further includes a locator field, the configuration information may further include an aggregation address corresponding to the locator field.

Step 202. The third node sends the configuration information to at least one node in a packet forwarding system.

In embodiments of this application, each node that obtains the configuration information may generate a forwarding table based on the configuration information, and perform, based on the forwarding table, the first forwarding behavior on the received packet into which the behavior instruction is encapsulated. The third node sends the configuration information to the at least one node in the packet forwarding system, so that at least two nodes that include the third node in the packet forwarding system may generate the forwarding table, and identify the behavior instruction based on the forwarding table. In FIG. 5, an example in which the third node separately sends the configuration information to a first node and a second node is used for schematic description.

Optionally, the third node may flood the configuration information to all other nodes in the packet forwarding system, or may flood the configuration information to some other nodes in the packet forwarding system. For example, the third node may flood the configuration information networkwide based on an interior gateway protocol (interior gateway protocol, IGP) such as an intermediate system to intermediate system (intermediate system to intermediate system, IS-IS) protocol or open shortest path first (open shortest path first, OSPF).

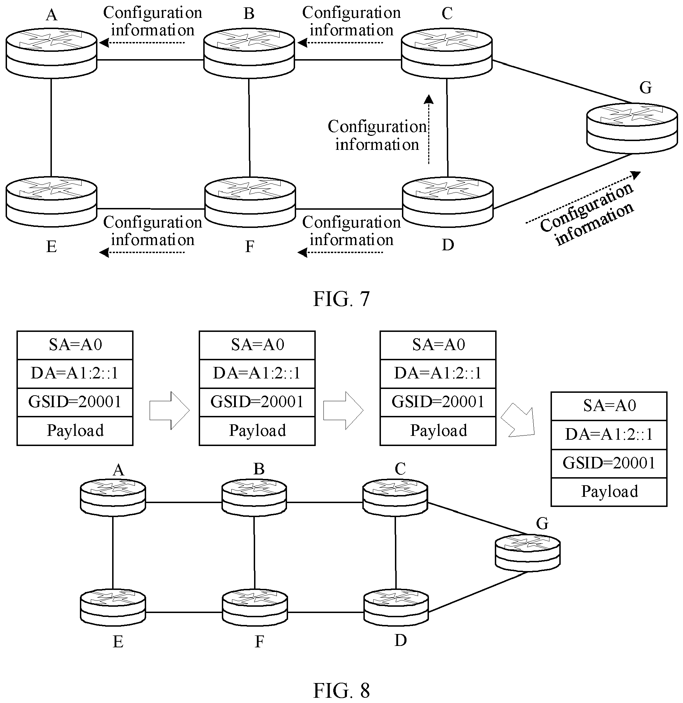

FIG. 7 is a schematic diagram of a structure of still another packet forwarding system according to an embodiment of this application. As shown in FIG. 7, it is assumed that the packet forwarding system includes seven nodes in total, a node A to a node G, and an operation and maintenance personnel configures configuration information in a node D. In this case, the node D may flood the configuration information to the other six nodes.

Step 203. At least two nodes that obtain the configuration information generate a forwarding table based on the configuration information.

In embodiments of this application, each node that obtains the configuration information in the packet forwarding system may generate the forwarding table based on the configuration information. For example, referring to FIG. 5, it is assumed that the third node separately sends the configuration information to the first node and the second node after receiving the configuration information configured by the operation and maintenance personnel, the first node, the second node, and the third node may all generate the forwarding table based on the configuration information. Alternatively, referring to FIG. 7, it is assumed that the node D separately sends the configuration information to the node A to the node C and the node E to the node G after receiving the configuration information, the node A to the node G may generate the forwarding table based on the configuration information.

The forwarding table records a correspondence between a behavior instruction and a first forwarding behavior. It may be understood that the node in the packet forwarding system may obtain a plurality of pieces of configuration information. Correspondingly, the forwarding table generated by the node based on the obtained plurality of pieces of configuration information may record a plurality of behavior instructions and a first forwarding behavior corresponding to each behavior instruction. The first forwarding behavior corresponding to each behavior instruction may include one or more behaviors.

For example, Table 1 is a forwarding table provided in embodiments of this application. Referring to Table 1, it may be learned that when the behavior instruction is 100, a corresponding first forwarding behavior may be encrypted forwarding. When the behavior instruction is 200, the corresponding first forwarding behavior may be slice resource forwarding based on a specified network slice. When the behavior instruction is 300, the corresponding first forwarding behavior may be slice resource forwarding based on a specified network slice. When the behavior instruction is 400, the corresponding first forwarding behavior may be forwarding based on a specified routing table. When the behavior instruction is 500, the corresponding first forwarding behavior may include: encrypted forwarding and forwarding based on a specified routing table.

**Table 1**

| Behavior instruction | First forwarding behavior (behavior) |
|---|---|
| 100 | Encrypted forwarding |
| 200 | Slice resource forwarding based on a specified network slice |
| 300 | Forwarding based on an allocated network resource |
| 400 | Forwarding based on a specified routing table |
| 500 | Encrypted forwarding+forwarding based on a specified routing table |

As described above, the behavior instruction may include a first function field and a parameter field. The first function field may indicate the first forwarding behavior, and the parameter field may indicate an execution parameter of the first forwarding behavior. Correspondingly, the forwarding table may record a correspondence between the first function field and the first forwarding behavior, and may further record a correspondence between the parameter field and the execution parameter. If the behavior instruction further includes an address symbol field, the forwarding table may further record a correspondence between the address symbol field and an aggregation address.

For example, Table 2 is another forwarding table provided in embodiments of this application. Referring to Table 2, it may be learned that a corresponding first forwarding behavior when the value of the first function field is 100 may be: encrypted forwarding, and the execution parameter does not need to be configured for the first forwarding behavior. When the value of the first function field is 200, the corresponding first forwarding behavior may be: slice resource forwarding based on the specified network slice, and when a value of the parameter field is 01, a corresponding execution parameter is an identifier of a network slice (slice) 1: a slice ID 1, and when a value of the parameter field is 02, a corresponding execution parameter is an identifier of a network slice 2: a slice ID 2. When the value of the first function field is 300, the corresponding first forwarding behavior may be: forwarding based on an allocated network resource, and when the value of the parameter field is 01, the corresponding execution parameter is: a bandwidth of 100 M (M), and when the value of the parameter field is 02, the corresponding execution parameter is: a bandwidth of 200 M. When the value of the first function field is 400, the corresponding first forwarding behavior may be: forwarding based on a specified routing table, and when the value of the parameter field is 01, the corresponding execution parameter is an identifier of the routing table 1: a table ID 1, and when the value of the parameter field is 02, the corresponding execution parameter is an identifier of the routing table 2: a table ID 2.

**Table 2**

| First function field | First forwarding behavior | Parameter Field | Execution parameter |
|---|---|---|---|
| 100 | Encrypted forwarding | None | None |
| 200 | Slice resource forwarding based on a specified network slice | 01 | Slice ID 1 |
| | | 02 | Slice ID 2 |
| 300 | Forwarding based on an allocated network resource | 01 | A bandwidth of 100 M |
| | | 02 | A bandwidth of 200 M |
| 400 | Forwarding based on a specified routing table | 01 | Table ID 1 |
| | | 02 | Table ID 2 |
| 500 | Encrypted forwarding+forwarding based on a specified routing table | 01 | Table ID 1 |
| | | 02 | Table ID 2 |

In the method provided in embodiments of this application, because the at least two nodes in the packet forwarding system may generate the forwarding table based on the obtained configuration information, after receiving the packet including the behavior instruction, the first forwarding behavior indicated by the behavior instruction may be determined based on the forwarding table. In other words, the node may determine semantics of the behavior instruction based on the forwarding table, and then accurately perform the corresponding first forwarding behavior. In addition, because a correspondence between the parameter field and the execution parameter may be further recorded in the forwarding table, the node that receives the packet may further accurately determine the execution parameter of the first forwarding behavior through the forwarding table.

Step 204. A second node encapsulates a behavior instruction into a packet.

In embodiments of this application, if the at least two nodes in the packet forwarding system each need to perform a forwarding behavior on the packet, a controller may deliver an encapsulation policy to a header node of a packet forwarding path, or referred to as an ingress node (the second node is used as an example in embodiments of this application) of the packet forwarding system. Alternatively, the operation and maintenance personnel may directly manually configure the encapsulation policy in the second node. The second node may further encapsulate the behavior instruction into the packet based on the obtained encapsulation policy. In addition, the packet further includes a destination address field, and the destination address field is used to carry a destination address of the packet.

It may be understood that the second node and the third node may be a same node, or may be different nodes. This is not limited in embodiments of this application.

It may be further understood that a value of the destination address field (namely, the destination address) may be continuously updated with packet forwarding, or may not be updated. For example, it is assumed that the packet is an SRv6 packet, and the SRv6 packet includes an SRH, after receiving the SRv6 packet, each node defined in the segment list of the SRH may update the value of the destination address field. To be specific, a destination address of the SRv6 packet may be updated segment by segment. Alternatively, if the SRv6 packet does not include the SRH, the value of the destination address field may remain unchanged in a process of forwarding the SRv6 packet.

For example, referring to FIG. 8, it is assumed that a node A is a header node of a packet, and in a current packet forwarding scenario, each node needs to forward the packet based on a network slice 1. Then, the node A may encapsulate a behavior instruction into the packet based on an obtained encapsulation policy. The behavior instruction GSID may include a first function field and a parameter field, where a value of the first function field is 200, and a value of the parameter field is 01. Correspondingly, as shown in FIG. 8, a value of the behavior instruction GSID that includes the first function field and the parameter field is 20001.

Referring to FIG. 8, it may be further learned that the packet may further include an SA field and a DA field. It is assumed that a destination node of the packet is a node G, and an address of the node G is A1:2::1, a value of the DA field is A1:2::1. In addition, as shown in FIG. 8, the packet does not include an SRH. Therefore, the value of the DA field may remain unchanged in a packet forwarding process.

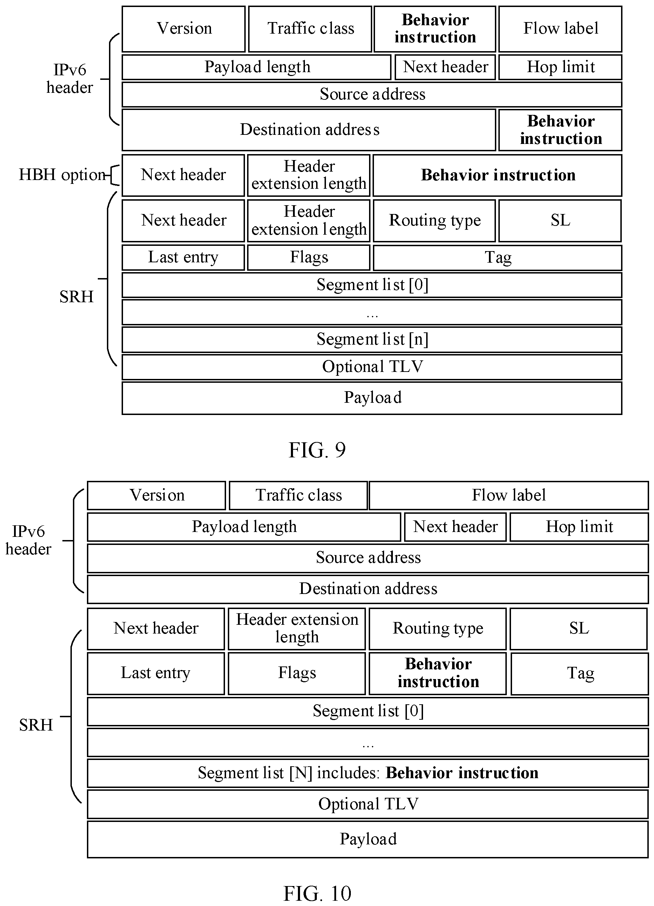

In an optional implementation, the packet forwarding system may be an SRv6 system. Correspondingly, the packet may be an SRv6 packet. As shown in FIG. 2 and FIG. 9, the SRv6 packet may include an IPv6 header and an SRH, and the IPv6 header or the SRH may carry the behavior instruction. Alternatively, referring to FIG. 9, the SRv6 packet may further include a hop-by-hop option (hop-by-hop option, HBH option) header, and the hop-by-hop option header may also carry the behavior instruction.

Optionally, by comparing FIG. 2 with FIG. 9, it may be learned that several bits (bits) of a flow tag field in the IPv6 header may be used to carry the behavior instruction. Alternatively, the last several bits of the destination address field in the IPv6 header may be used to carry the behavior instruction. Alternatively, the behavior instruction may be encapsulated after an extension header length field in the hop-by-hop option header.

In a scenario in which the behavior instruction is encapsulated in the IPv6 header or the hop-by-hop option header of the SRv6 packet, each node that receives the SRv6 packet may read the behavior instruction, and perform the first forwarding behavior indicated by the behavior instruction. Therefore, hop-by-hop execution of the first forwarding behavior may be implemented.

Optionally, by comparing FIG. 2 with FIG. 10, it may be learned that several bits in a tag field of the SRH may be used to carry the behavior instruction, or the entire tag field may be directly used to carry the behavior instruction. Alternatively, the last identification field (namely, a segment list [n]) in a plurality of identification fields included in the segment list of the SRH may be used to carry the behavior instruction, and a flags field of the SRH may indicate that a value of the last identification field includes the behavior instruction. In this way, it may be convenient for the node that receives the packet to obtain the behavior instruction from the last identification field in the segment list based on an indication of the flags field, and query a forwarding table based on the behavior instruction and perform a first forwarding behavior. It may be understood that a length of the behavior instruction may be equal to a length of the last identification field. Alternatively, a length of the behavior instruction may be less than a length of the last identification field, to be specific, the last identification field may further carry other information than the behavior instruction.

For a scenario in which the behavior instruction is encapsulated into the SRH of the SRv6 packet, because only a node defined in the segment list in the SRH may read the behavior instruction, and perform the first forwarding behavior indicated by the behavior instruction, segment-by-segment execution of the first forwarding behavior may be implemented.

In another optional implementation, the packet forwarding system may be a segment routing system based on multi-protocol label switching (MPLS). Correspondingly, the packet may be an MPLS SR packet. The MPLS SR packet includes a label stack, and the label stack may carry the behavior instruction.

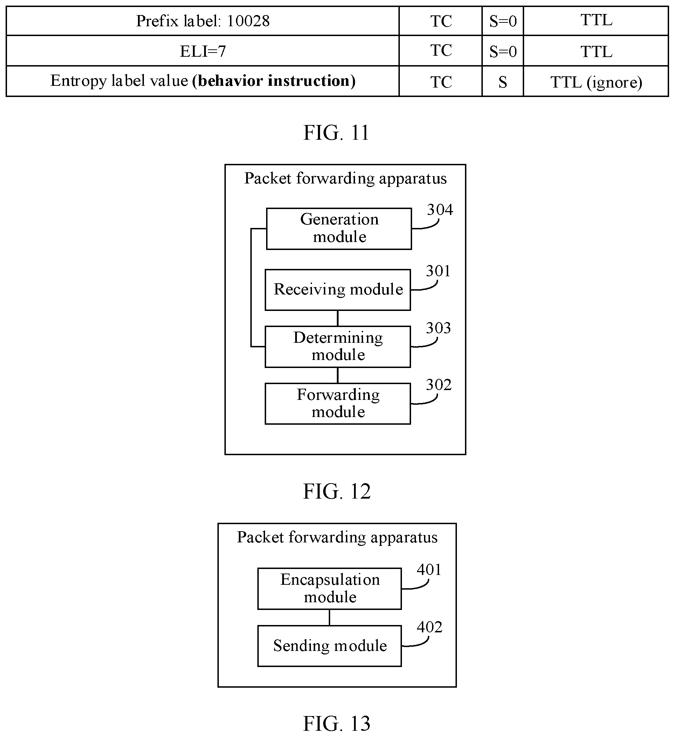

FIG. 11 is a schematic diagram of a structure of a label stack in an MPLS SR packet according to an embodiment of this application. As shown in FIG. 11, the label stack may include a plurality of layers of MPLS labels, and each layer of MPLS label may include the following fields: a label (label) field, a TC field, a stack bottom identification field S, and a time to live (time to live, TTL) field. If a value of the stack bottom identification field S is 1, it indicates that the MPLS label is a stack bottom label, and if a value of the stack bottom identification field S is 0, it indicates that the MPLS label is not a stack bottom label. In the implementation, the behavior instruction may be carried through an MPLS label.

For example, FIG. 11 schematically shows three MPLS labels. A first MPLS label is a prefix label (prefix label), and a value of a tag field of the prefix label is 10028. A tag field of a second MPLS label is an entropy label indicator (entropy label indicator, ELI). A value of the ELI is 7, and may indicate that an entropy label is further included after the ELI. The third MPLS label is the entropy label, and a tag field of the entropy label may be used to carry the behavior instruction.

Alternatively, a new ELI value (for example, ELI=13) may also be defined, and the value may indicate that an MPLS label used to encapsulate the behavior instruction is further included after the ELI.

Optionally, in embodiments of this application, a length of the behavior instruction may be less than 128 bits. For example, the length of the behavior instruction may be 8 bits or 32 bits. Because the length of the behavior instruction is short, flexible encapsulation at different locations of the packet may be facilitated. This improves flexibility of encapsulation of the behavior instruction.

Step 205. The second node sends a packet.

After completing encapsulation of the behavior instruction, the second node may forward the packet based on a value of a destination address field of the packet, so that at least two nodes in the packet forwarding system forward, based on a first forwarding behavior indicated by the behavior instruction, the packet to a node indicated by the value of the destination address field. For example, the second node may query a routing table based on the value of the destination address field, to determine an outbound interface used to forward the packet, and may further forward the packet through the determined outbound interface.

Referring to FIG. 5, an example in which a destination node of a packet is a third node and an intermediate node is a first node is used for description in embodiments of this application, and the second node may send the packet to the first node.

For example, referring to FIG. 8, it is assumed that a header node is a node A, an intermediate node includes a node B and a node C, a destination node is a node G, and a value of a DA field of the packet is an address A1:2::1 of the node G. In this case, the node A may query the routing table based on the destination address A1:2::1, and forward the packet to the node B based on the queried outbound interface.

It may be understood that when serving as the header node to send the packet, the second node may not need to perform the first forwarding behavior indicated by the behavior instruction. Alternatively, the second node may also forward the packet based on the first forwarding behavior indicated by the behavior instruction. This is not limited in embodiments of this application.

Step 206. The first node determines, based on the forwarding table, a first forwarding behavior indicated by the behavior instruction.

After receiving the packet from the second node, the first node may query the forwarding table by using the behavior instruction in the packet as an index, to determine the first forwarding behavior indicated by the behavior instruction. It may be understood that the first node and the third node may be a same node, or may be different nodes. This is not limited in embodiments of this application.

With reference to FIG. 6 and Table 2, it may be learned that the behavior instruction may include a first function field that indicates the first forwarding behavior, and the forwarding table may record a correspondence between the first function field and the first forwarding behavior. Correspondingly, the first node may query the forwarding table by using a value of the first function field as an index, to determine the first forwarding behavior.

If the behavior instruction further includes a parameter field, and the forwarding table further records a correspondence between the parameter field and an execution parameter of the first forwarding behavior, the first node may further query the forwarding table by using a value of the parameter field as an index, to determine the execution parameter of the first forwarding behavior.

For example, referring to FIG. 8, it is assumed that a value of the behavior instruction GSID is 20001, 200 is the value of the first function field, and 01 is the value of the parameter field. In this case, the node B may determine, by querying the forwarding table shown in Table 2, that the first forwarding behavior indicated by the behavior instruction is: slice resource forwarding based on a specified network slice, and an identifier of the specified network slice is a slice ID 1.

Alternatively, if a value of the behavior instruction GSID is 30002, 300 is the value of the first function field, and 02 is the value of the parameter field. In this case, the node B may determine, by querying the forwarding table shown in Table 2, that the first forwarding behavior indicated by the behavior instruction is: forwarding based on an allocated network resource, and the allocated network resource includes a bandwidth of 200 M.

Alternatively, if a value of the behavior instruction GSID is 40001, 400 is the value of the first function field, and 01 is the value of the parameter field. In this case, the node B may determine, by querying the forwarding table shown in Table 2, that the first forwarding behavior indicated by the behavior instruction is: forwarding based on a specified routing table, and an identifier of the specified routing table is a table ID 1.

Alternatively, if a value of the behavior instruction GSID is 50001, 500 is the value of the first function field, and 01 is the value of the parameter field. In this case, the node B may determine, by querying the forwarding table shown in Table 2, that the first forwarding behavior indicated by the behavior instruction includes: encrypted forwarding, and forwarding based on a specified routing table, and an identifier of the specified routing table is a table ID 1.

Optionally, the SRH in the packet may further include a segment list corresponding to a forwarding path of the packet, the segment list includes a plurality of SIDs, each SID may include a second function field, and the second function field may indicate a second forwarding behavior. In addition, values of second function fields in different SIDs may be the same or different. In a packet forwarding process, the node that receives the packet may update the value of the destination address field of the packet based on the SID indicated by the SL in the SRH, to be specific, the node that receives the packet may update the SID indicated by the SL to the destination address of the packet. Then, the node that receives the packet may determine the first forwarding behavior based on the first function field, determine the second forwarding behavior based on the second function field in the destination address, and determine a combination of the first forwarding behavior and the second forwarding behavior as a to-be-performed forwarding behavior.

In the packet forwarding process, destination addresses in packets received by different nodes may be different. Therefore, different nodes may combine the first function field with second function fields in different destination addresses, to determine the to-be-performed forwarding behavior. For example, referring to FIG. 3, the destination address in the packet received by the node B is B::, and the node B may jointly determine the to-be-performed forwarding behavior based on the first function field in the behavior instruction and the second function field in the destination address B::. If the destination address in the packet received by the node D is D::, the node D may jointly determine the to-be-performed forwarding behavior based on the first function field in the behavior instruction and the second function field in the destination address D::.

The following uses the first node as an example to describe a process of jointly determining the to-be-performed forwarding behavior based on both the first function field and the second function field in the destination address.

In an optional implementation, the first node may query the forwarding table by using the value of the first function field as the index, to determine the first forwarding behavior indicated by the behavior instruction. In addition, the first node may query the routing table by using the value of the second function field as the index, to determine the second forwarding behavior indicated by the second function field. Then, the first node may determine a combination of the first forwarding behavior and the second forwarding behavior as the to-be-performed forwarding behavior. It may be understood that an execution order of the foregoing steps of querying the forwarding table and the routing table may be adjusted based on a situation. This is not limited in embodiments of this application.

The SRv6 system is used as an example. The second forwarding behavior (behavior) indicated by the second function field of the destination address may include: a plurality of behaviors such as END, END.X, END.DT4, or END.DT6. A behavior of the END may include: if an SL is not 0, decrementing the SL by 1 and copying a value of a segment list [SL] to a DA in an IPv6 header. Based on the behavior of END, a behavior of END.X further includes: forwarding the packet to a specified neighboring node.

For a data structure of the SID in the segment list, a type of the second forwarding behavior that may be indicated by the second function field, and a related explanation of each second forwarding behavior, refer to the draft: draft-ietf-spring-srv6-network-programming-28. Related content in the draft may be incorporated in embodiments of this application by reference.

In another optional implementation, the first node may integrate the routing table into the forwarding table. In other words, after receiving configuration information, the first node may jointly generate the forwarding table based on the configuration information and the obtained second function field. The second function field used to generate the forwarding table may be delivered by a controller, or may be configured by an operation and maintenance personnel. After receiving the packet, the first node may further query the integrated forwarding table by using a combination of the value of the first function field and the value of the second function field as an index, to determine the to-be-performed forwarding behavior. The to-be-performed forwarding behavior includes the first forwarding behavior indicated by the first function field and the second forwarding behavior indicated by the second function field.

For example, Table 3 is an integrated forwarding table provided in embodiments of this application. It is assumed that the value of the first function field in the behavior instruction is 100, and the value of the second function field in the destination address is 1, that the first node may determine, based on the integrated forwarding table shown in Table 3, the to-be-performed forwarding behavior includes: encrypted forwarding, and a behavior defined by END. Encrypted forwarding is the first forwarding behavior, and the behavior defined by END is the second forwarding behavior. If the value of the first function field in the behavior instruction is 100, and the value of the second function field in the destination address is 2, that the first node may determine, based on the routing and forwarding table shown in Table 3, the to-be-performed forwarding behavior includes: encrypted forwarding, and a behavior defined by END.X. Encrypted forwarding is the first forwarding behavior, and the behavior defined by END.X is the second forwarding behavior.

**Table 3**

| First function field | Second function field | To-be-performed forwarding behavior |
|---|---|---|
| 100 | 1 | Encrypted forwarding+END |
| | 2 | Encrypted forwarding+END.X |

In a possible implementation, the behavior instruction in the packet may be used together with the SID in the segment list of the SRH, to be specific, the header node encapsulates the behavior instruction and the SRH into the packet. The forwarding behavior performed by the at least two nodes in the packet forwarding system may include both the first forwarding behavior defined by the behavior instruction in the packet, and the second forwarding behavior defined by the SID in the segment list of the SRH. Therefore, the behavior instruction in the packet not only may be compatible with a programmable scheme of a conventional segment list, but also may effectively enrich a forwarding behavior that may be performed by each node in the packet forwarding system without reallocating an SID to each node. This improves flexibility of packet forwarding processing.

In another possible implementation, the behavior instruction in the packet may alternatively replace the segment list in the SRH. In other words, after encapsulating the behavior instruction into the packet, the header node may not need to encapsulate the segment list, or may not need to encapsulate the SRH. In the encapsulation manner, only the behavior instruction in the packet may indicate at least two nodes in the packet forwarding system to perform a same first forwarding behavior on the packet. In this way, programming complexity of the SRv6 system is effectively reduced, and a packet structure is simplified.

Step 207. The first node forwards the packet based on the first forwarding behavior indicated by the behavior instruction.

In embodiments of this application, after determining the first forwarding behavior, the first node may forward, based on the first forwarding behavior, the packet to the node indicated by the destination address.

For example, referring to FIG. 8, if a value of the behavior instruction GSID is 20001, the node B may forward the packet to the node C through a network slice whose identifier is a slice ID 1. The node C may further forward the packet to the destination node G through the network slice identified as the slice ID 1 based on an indication of the behavior instruction in the packet.

Alternatively, if a value of the behavior instruction GSID is 30002, both the node B and the node C may allocate a bandwidth of 200 M to the packet on an interface configured to forward the packet, and forward the packet based on the bandwidth of 200 M. Alternatively, if a value of the behavior instruction GSID is 40001, both the node B and the node C may forward the packet by querying a routing table whose identifier is a table ID 1. Alternatively, if a value of the behavior instruction GSID is 50001, both the node B and the node C may perform encrypted forwarding on the packet by querying the routing table whose identifier is the table ID 1.

It may be understood that for a scenario in which the destination address in the packet further includes the second function field, the forwarding behavior performed by the first node further includes the second forwarding behavior indicated by the second function field. In other words, the first node may forward the packet based on the first forwarding behavior and the second forwarding behavior. For example, it is assumed that a value of the first function field in the behavior instruction is 100, and a value of the second function field in the destination address is 2, the forwarding behavior performed by the first node includes both the first forwarding behavior: encrypted forwarding and a second forwarding behavior: a behavior defined by END.X.

In addition, in a scenario in which the destination address further includes a second function field, the first node may jointly determine a to-be-performed forwarding behavior based on two function fields. In this way, the first node not only ensures reliable forwarding of the packet, but also may be effectively compatible with a forwarding scheme of a conventional SRv6 system.

It may be further understood that an execution order of the steps in the foregoing packet forwarding method may be adjusted based on a situation, and the steps may also be added or deleted based on a situation. For example, the third node may perform step 203 before step 202. Alternatively, the second node may perform step 204 and step 205 before step 203. In other words, when the second node does not generate a forwarding table, the second node may also encapsulate the behavior instruction into the packet. Alternatively, the second node may replace the foregoing step 205 through the foregoing step 207. In other words, the second node may also forward the packet based on the first forwarding behavior indicated by the behavior instruction.

In conclusion, embodiments of this application provide a packet forwarding method. A packet includes both a destination address and a behavior instruction, and at least two nodes in a packet forwarding system may identify the behavior instruction in the packet, and may forward the packet based on a first forwarding behavior indicated by the behavior instruction. In other words, the at least two nodes in the packet forwarding system may perform a same first forwarding behavior under an indication of a same behavior instruction in a same packet. Therefore, when a plurality of nodes in the packet forwarding system each need to perform a forwarding behavior, an SID does not need to be allocated to each node, but only the behavior instruction needs to be carried in a packet. The method provided in embodiments of this application effectively reduces a quantity of SIDs that need to be allocated in the system, and reduces complexity of packet forwarding.

In addition, based on a requirement of an application scenario, the behavior instruction in the scheme provided in embodiments of this application may replace the segment list in the SRH. In other words, the header node encapsulates a behavior instruction into the packet, and does not need to encapsulate the SRH, so that the at least two nodes in the packet forwarding system may perform the first forwarding behavior indicated by the behavior instruction in the packet. In this way, programming complexity of the SRv6 system is effectively reduced, and a packet structure is simplified.

Alternatively, the behavior instruction in the scheme provided in embodiments of this application may also be used together with the segment list in the SRH, to be specific, the header node encapsulates the behavior instruction and the SRH into the packet. The forwarding behavior performed by the at least two nodes in the packet forwarding system may not only include the first forwarding behavior defined by the behavior instruction in the packet, but further include the second forwarding behavior defined by the SID in the segment list of the SRH. Therefore, a forwarding behavior that may be performed by each node in the packet forwarding system may be effectively enriched on a premise of avoiding reallocating an SID to each node. This improves flexibility of packet forwarding processing.

FIG. 12 is a schematic diagram of a structure of a packet forwarding apparatus according to an embodiment of this application. The apparatus may be used in a first node in a packet forwarding system, and the first node may be any node 01 in the system shown in FIG. 1 or FIG. 3. In addition, the apparatus may implement the step in the embodiment shown in FIG. 4, or implement the step performed by the first node in the embodiment shown in FIG. 5. Referring to FIG. 12, the apparatus includes a receiving module 301 and a forwarding module 302.

The receiving module 301 is configured to receive a packet, where the packet includes a destination address and a behavior instruction. For function implementation of the receiving module 301, refer to the related description of step 101 or step 205.

The forwarding module 302 is configured to forward, based on a first forwarding behavior indicated by the behavior instruction, the packet to a node indicated by the destination address, where the packet forwarding system includes a plurality of nodes, at least two of the plurality of nodes can perform the first forwarding behavior on the packet based on the behavior instruction in the packet, and the first node belongs to the at least two nodes. For function implementation of the forwarding module 302, refer to the related description of step 102 or step 207.

Optionally, the behavior instruction includes a first function field, where the first function field indicates the first forwarding behavior.

Optionally, the behavior instruction includes a first function field, the destination address includes a second function field; the first function field indicates the first forwarding behavior, and the second function field indicates a second forwarding behavior; and the forwarding module 302 may be configured to: forward, based on the first forwarding behavior indicated by the first function field and the second forwarding behavior indicated by the second function field, the packet to the node indicated by the destination address.

Optionally, the behavior instruction further includes at least one of a locator field and a parameter field, where the locator field indicates an aggregation address of the packet forwarding system, and the parameter field indicates an execution parameter of the first forwarding behavior.

Optionally, the first forwarding behavior may include at least one of the following behaviors: encrypted forwarding; slice resource forwarding based on a specified network slice; forwarding based on an allocated network resource; and forwarding based on a specified routing table.

Optionally, the packet is an SRv6 packet, and the behavior instruction is carried in an IPv6 header, an SRH, or a hop-by-hop option header of the packet; or the packet is an MPLS SR packet, and a label stack of the packet carries the behavior instruction.

Optionally, the SRH includes a tag field; and the tag field carries the behavior instruction.

Optionally, the SRH includes a flags field and a segment list, and the segment list includes a plurality of identification fields; and the last identification field in the segment list carries the behavior instruction, and the flags field indicates that a value of the last identification field includes the behavior instruction.

Optionally, the at least two nodes each store a forwarding table, and the forwarding table records a correspondence between the behavior instruction and the first forwarding behavior; and as shown in FIG. 12, the apparatus may further include a determining module 303.

The determining module 303 is configured to determine, based on the forwarding table, a first forwarding behavior indicated by the behavior instruction. For function implementation of the determining module 303, refer to the related description of step 206.

Optionally, as shown in FIG. 12, the apparatus may further include a generation module 304.

The generation module 304 is configured to generate the forwarding table based on obtained configuration information, where the configuration information includes the behavior instruction and the first forwarding behavior. For function implementation of the generation module 304, refer to the related description of step 203.

Optionally, the length of the behavior instruction is less than 128 bits.

In conclusion, embodiments of this application provide a packet forwarding apparatus. A packet received by the apparatus includes a behavior instruction, and the apparatus may forward the packet based on a first forwarding behavior indicated by the behavior instruction. In addition, the at least two nodes in the packet forwarding system each may identify the behavior instruction in the packet, and may forward the packet based on a first forwarding behavior indicated by the behavior instruction. Therefore, when a plurality of nodes in the packet forwarding system each need to perform a forwarding behavior, an SID does not need to be allocated to each node, but only the behavior instruction needs to be carried in a packet. The scheme provided in embodiments of this application effectively reduces a quantity of SIDs that need to be allocated in the system, and reduces complexity of packet forwarding.

FIG. 13 is a schematic diagram of a structure of a packet forwarding apparatus according to an embodiment of this application. The apparatus may be used in a second node in a packet forwarding system, and the second node may be any node 01 in the system shown in FIG. 1 or FIG. 3. In addition, the apparatus may implement the step performed by the second node in the embodiment shown in FIG. 5. Referring to FIG. 13, the apparatus includes an encapsulation module 401 and a sending module 402.

The encapsulation module 401 is configured to encapsulate a behavior instruction into a packet, where the packet includes a destination address field. For function implementation of the encapsulation module 401, refer to the related description of step 204.

The sending module 402 is configured to send the packet, so that at least two nodes in the packet forwarding system forward, based on a first forwarding behavior indicated by the behavior instruction in the packet, the packet to a node indicated by a value of the destination address field. For function implementation of the sending module 402, refer to the related description of step 205.

Optionally, the behavior instruction includes a first function field, where the first function field indicates the first forwarding behavior.

Optionally, the behavior instruction includes a first function field, the packet further includes a segment list corresponding to a forwarding path of the packet, the segment list includes a plurality of segment identifiers, each of the plurality of segment identifiers further includes a second function field, the first function field indicates the first forwarding behavior, and the second function field indicates a second forwarding behavior; and the at least two nodes can forward, based on the first forwarding behavior indicated by the first function field and the second forwarding behavior indicated by the second function field, the packet to the node indicated by the value of the destination address field.

Optionally, the behavior instruction further includes at least one of a locator field and a parameter field, where the locator field indicates an aggregation address of the packet forwarding system, and the parameter field indicates an execution parameter of the first forwarding behavior.

Optionally, the first forwarding behavior may include at least one of the following behaviors: encrypted forwarding; slice resource forwarding based on a specified network slice; forwarding based on an allocated network resource; and forwarding based on a specified routing table.

Optionally, the packet is an SRv6 packet, and the behavior instruction is carried in an IPv6 header, an SRH, or a hop-by-hop option header of the packet; or the packet is an MPLS SR packet, and a label stack of the packet carries the behavior instruction.

Optionally, the SRH includes a tag field; and the tag field carries the behavior instruction.

Optionally, the SRH includes a flags field and a segment list, and the segment list includes a plurality of identification fields; and the last identification field in the segment list carries the behavior instruction, and the flags field indicates that a value of the last identification field includes the behavior instruction.

Optionally, the length of the behavior instruction is less than 128 bits.

In conclusion, embodiments of this application provide a packet forwarding apparatus. The apparatus may encapsulate a behavior instruction into a packet, and the behavior instruction in the packet may be identified and performed by at least two nodes. Therefore, when the plurality of nodes in the packet forwarding system need to perform a forwarding behavior, an SID does not need to be allocated to each node, but only a behavior instruction needs to be carried in a packet. Therefore, a quantity of SIDs that need to be allocated in the system is effectively reduced, and complexity of packet forwarding is reduced.

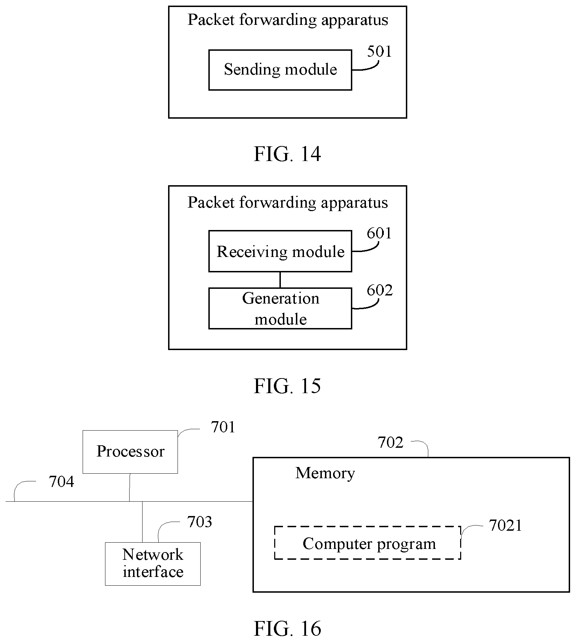

FIG. 14 is a schematic diagram of a structure of still another packet forwarding apparatus according to an embodiment of this application. The apparatus may be used in a third node in a packet forwarding system, and the third node may be any node 01 in the system shown in FIG. 1 or FIG. 3. In addition, the apparatus may implement the step performed by the third node in the embodiment shown in FIG. 5. Referring to FIG. 14, the apparatus includes:
a sending module 501, configured to send configuration information to at least one node in the packet forwarding system, where the configuration information includes a behavior instruction and a first forwarding behavior corresponding to the behavior instruction, and the configuration information is used by at least two nodes in the packet forwarding system to generate a forwarding table, and perform, based on the forwarding table, the first forwarding behavior on a received packet into which the behavior instruction is encapsulated, where the third node belongs to the at least two nodes.

For function implementation of the sending module 501, refer to the related description of step 202.

Optionally, the behavior instruction includes a first function field, where the first function field indicates the first forwarding behavior.

Optionally, the behavior instruction includes a first function field, the packet into which the behavior instruction is encapsulated further includes a segment list corresponding to a forwarding path of the packet, the segment list includes a plurality of segment identifiers, each of the plurality of segment identifiers further includes a second function field, the first function field indicates the first forwarding behavior, and the second function field indicates a second forwarding behavior; and
the at least two nodes can generate the forwarding table based on the configuration information and the second function field, and perform, based on the forwarding table, the first forwarding behavior and the second forwarding behavior on the received packet into which the behavior instruction is encapsulated.

Optionally, the behavior instruction further includes at least one of a locator field and a parameter field, where the locator field indicates an aggregation address of the packet forwarding system, and the parameter field indicates an execution parameter of the first forwarding behavior.

Optionally, the first forwarding behavior may include at least one of the following behaviors: encrypted forwarding; slice resource forwarding based on a specified network slice; forwarding based on an allocated network resource; and forwarding based on a specified routing table.

In conclusion, embodiments of this application provide a packet forwarding apparatus. The apparatus may send configuration information to another node in the packet forwarding system, to ensure that the at least two nodes in the packet forwarding system may generate the forwarding table based on the configuration information. Further, when receiving the packet into which the behavior instruction is encapsulated, the at least two nodes may identify semantics of the behavior instruction based on the forwarding table, and perform a same first forwarding behavior on the packet. Correspondingly, when the plurality of nodes in the packet forwarding system need to perform a forwarding behavior, an SID does not need to be allocated to each node, but only a behavior instruction needs to be encapsulated in a packet. Therefore, a quantity of SIDs that need to be allocated in the system is effectively reduced, and complexity of packet forwarding is reduced.

FIG. 15 is a schematic diagram of a structure of yet another packet forwarding apparatus according to an embodiment of this application. The apparatus may be used in a first node in a packet forwarding system, and the first node may be any node 01 in the system shown in FIG. 1 or FIG. 3. Referring to FIG. 15, the apparatus includes a receiving module 601 and a generation module 602.

The receiving module 601 is configured to receive configuration information, where the configuration information includes a behavior instruction and a first forwarding behavior corresponding to the behavior instruction. For function implementation of the receiving module 601, refer to the related description of step 201 or step 202.

The generation module 602 is configured to generate a forwarding table based on the configuration information, to perform, based on the forwarding table, the first forwarding behavior on a received packet into which the behavior instruction is encapsulated, where the packet forwarding system includes a plurality of nodes, at least two of the plurality of nodes can generate the forwarding table based on the configuration information, and the first node belongs to the at least two nodes.

For function implementation of the generation module 602, refer to the related description of step 203.

Optionally, the behavior instruction includes a first function field, where the first function field indicates the first forwarding behavior.

Optionally, the behavior instruction includes a first function field, the packet into which the behavior instruction is encapsulated further includes a segment list corresponding to a forwarding path of the packet, the segment list includes a plurality of segment identifiers, each of the plurality of segment identifiers further includes a second function field, the first function field indicates the first forwarding behavior, and the second function field indicates a second forwarding behavior; and
the generation module 602 may be configured to generate the forwarding table based on the configuration information and the second function field, to perform, based on the forwarding table, the first forwarding behavior and the second forwarding behavior, on the received packet into which the behavior instruction is encapsulated.

Optionally, the behavior instruction further includes at least one of a locator field and a parameter field, where the locator field indicates an aggregation address of the packet forwarding system, and the parameter field indicates an execution parameter of the first forwarding behavior.

Optionally, the first forwarding behavior may include at least one of the following behaviors: encrypted forwarding; slice resource forwarding based on a specified network slice; forwarding based on an allocated network resource; and forwarding based on a specified routing table.

In conclusion, embodiments of this application provide a packet forwarding apparatus. The apparatus may generate a forwarding table based on received configuration information, to perform, based on the forwarding table, the first forwarding behavior on a received packet into which the behavior instruction is encapsulated. Because the at least two nodes in the packet forwarding system each may generate a forwarding table based on the configuration information, when the plurality of nodes in the packet forwarding system need to perform a forwarding behavior, an SID does not need to be allocated to each node, but only a behavior instruction needs to be encapsulated in a packet. Therefore, a quantity of SIDs that need to be allocated in the system is effectively reduced, and complexity of packet forwarding is reduced.

It may be clearly understood by a person skilled in the art that, for the purpose of convenient and brief description, for a detailed operating process of each packet forwarding apparatus and each module described above, refer to a corresponding process in the foregoing method embodiments, and details are not described herein again.

It should be understood that each packet forwarding apparatus provided in embodiments of this application may alternatively be implemented by using an application-specific integrated circuit (application-specific integrated circuit, ASIC) or a programmable logic device (programmable logic device, PLD). The PLD may be a complex programmable logic device (complex programmable logical device, CPLD), a field-programmable gate array (field-programmable gate array, FPGA), a generic array logic (generic array logic, GAL), or any combination thereof. Alternatively, the packet forwarding method provided in the foregoing method embodiments may be implemented through software. When the packet forwarding method provided in the foregoing method embodiment is implemented through software, various modules in the foregoing packet forwarding apparatus may also be software modules.

FIG. 16 is a schematic diagram of a structure of yet another packet forwarding apparatus according to an embodiment of this application. The packet forwarding apparatus may be used in any node in the system shown in FIG. 1, FIG. 3, FIG. 7, or FIG. 8. As shown in FIG. 16, the packet forwarding apparatus may include: a processor 701, a memory 702, a transceiver 703, and a bus 704. The bus 704 is configured to connect the processor 701, the memory 702, and the transceiver 703. The transceiver 703 (which may be wired or wireless) may implement a communication connection to another device. The memory 702 stores a computer program, and the computer program is used to implement various application functions. When the various modules in the network device shown in FIG. 10 are implemented by using software modules, programs corresponding to the software modules may be stored in the memory 702 of the network device.

It should be understood that, in embodiments of this application, the processor 701 may be a CPU, or the processor 701 may be another general-purpose processor, a digital signal processor (DSP), an application-specific integrated circuit (ASIC), a field-programmable gate array (FPGA), a GPU or another programmable logic device, a discrete gate or a transistor logic device, a discrete hardware component, or the like. The general-purpose processor may be a microprocessor or any conventional processor or the like.

The memory 702 may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

In addition to a data bus, the bus 704 may further include a power bus, a control bus, a status signal bus, and the like. However, for clear description, various types of buses in the figure are marked as the bus 704.

According to one aspect, the processor 701 in the packet forwarding apparatus may be configured to receive a packet. The packet includes a destination address and a behavior instruction, and forward, based on a first forwarding behavior indicated by the behavior instruction, the packet to a node indicated by the destination address. For a detailed processing process of the processor 701, refer to the foregoing method embodiment. For example, refer to detailed descriptions of step 101 and step 102 in the embodiment shown in FIG. 4, or refer to detailed descriptions of step 203, step 206, and step 207 in the embodiment shown in FIG. 5. Details are not described herein again.

According to another aspect, the processor 701 in the packet forwarding apparatus may be configured to encapsulate the behavior instruction into the packet, where the packet includes a destination address field; and send the packet, so that at least two nodes in the packet forwarding system forward, based on a first forwarding behavior indicated by the behavior instruction, the packet to a node indicated by a value of the destination address field. For a detailed processing process of the processor 701, refer to the foregoing method embodiment. For example, refer to detailed descriptions of step 204 and step 205 in the embodiment shown in FIG. 5. Details are not described herein again.

According to still another aspect, the processor 701 in the packet forwarding apparatus may be configured to send configuration information to at least one node in the packet forwarding system, where the configuration information includes a behavior instruction and a first forwarding behavior corresponding to the behavior instruction, and the configuration information is used by at least two nodes in the packet forwarding system to generate a forwarding table, and perform, based on the forwarding table, the first forwarding behavior on a received packet into which the behavior instruction is encapsulated. For a detailed processing process of the processor 701, refer to the foregoing method embodiment. For example, refer to a detailed description of step 202 in the embodiment shown in FIG. 5. Details are not described herein again.

According to yet another aspect, the processor 701 in the packet forwarding apparatus may be configured to receive configuration information, where the configuration information includes a behavior instruction and a first forwarding behavior corresponding to the behavior instruction, and generate a forwarding table based on the configuration information, to perform, based on the forwarding table, the first forwarding behavior on a received packet into which the behavior instruction is encapsulated. For a detailed processing process of the processor 701, refer to the foregoing method embodiment. For example, refer to detailed descriptions of step 201 to step 203 in the embodiment shown in FIG. 5. Details are not described herein again.

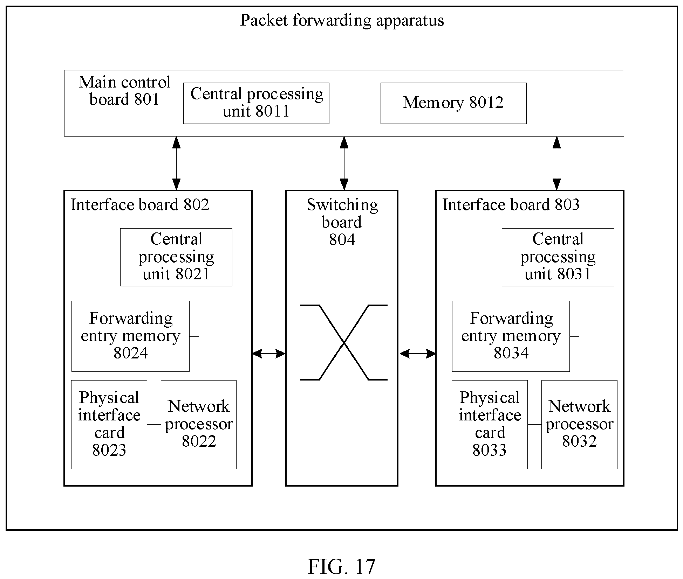

FIG. 17 is a schematic diagram of a structure of yet another packet forwarding apparatus according to an embodiment of this application. The packet forwarding apparatus may be used in any node in the system shown in FIG. 1, FIG. 3, FIG. 7, or FIG. 8. As shown in FIG. 17, the packet forwarding apparatus may include: a main control board 801 and at least one interface board (an interface board is also referred to as a line card or a service board). For example, an interface board 802 and an interface board 803 are shown in FIG. 17. In a case of a plurality of interface boards, a switching board 804 may be included. The switching board 804 is configured to complete data exchange between the interface boards.

The main control board 801 is configured to complete functions such as system management, device maintenance, and protocol processing. The interface board 802 and the interface board 803 are configured to provide various service interfaces (for example, a POS interface, a GE interface, an ATM interface, or the like) and implement packet forwarding. There are mainly three types of functional units on the main control board 801: a system management control unit, a system clock unit, and a system maintenance unit. The main control board 801, the interface board 802, and the interface board 803 are connected to a system backplane through a system bus to implement interworking. The interface board 802 includes one or more central processing units 8021. The central processing unit 8021 is configured to control and manage the interface board 802, communicate with the central processing unit 8011 on the main control board 801, and is configured to perform packet forwarding processing. A forwarding entry memory 8024 on the interface board 802 is configured to store a forwarding entry, and the central processing unit 8021 may perform packet forwarding by searching for a forwarding entry stored in the forwarding entry memory 8024.

The interface board 802 includes one or more physical interface cards 8023, configured to receive a packet sent by a previous-hop node, and send a processed packet to a next-hop node based on an indication of the central processing unit 8021. A specific implementation process is not described herein one by one. Specific functions of the central processing unit 8021 are also not described one by one herein again.

It may be understood that as shown in FIG. 17, this embodiment includes a plurality of interface boards, and a distributed forwarding mechanism is used. In the mechanism, a structure of the interface board 803 is basically the same as a structure of the interface board 802. In addition, an operation on the interface board 803 is basically similar to an operation on the interface board 802. For brevity, details are not described again. In addition, it may be understood that the central processing unit 8021 and/or the network processor 8022 in the interface board 802 in FIG. 17 may be dedicated hardware or a chip, for example, an application-specific integrated circuit may be used to implement the foregoing functions. The implementation is generally referred to as a manner in which a forwarding plane uses dedicated hardware or a chip for processing. In another implementation, the central processing unit 8021 and/or the network processor 8022 may also implement the functions described above by using a general-purpose processor, for example, a general CPU.

In addition, it should be understood that there may be one or more main control boards 801. When there are a plurality of main control boards, the main control boards may include an active main control board and a standby main control board. There may be one or more interface boards, and the device with a stronger data processing capability provides more interface boards. In a case of a plurality of interface boards, the plurality of interface boards may communicate with each other through one or more switching boards. When there are a plurality of interface boards, load sharing and redundancy backup may be jointly implemented. In a central forwarding architecture, the device may not need a switching board, and the interface board provides a function of processing service data of an entire system. In a distributed forwarding architecture, the device includes a plurality of interface boards, and may implement data exchange between the plurality of interface boards through the switching board, to provide a large-capacity data exchange and processing capability. Therefore, data access and processing capability of a network device in the distributed architecture is greater than that of a device in the centralized architecture. A specific architecture that is to be used depends on a specific networking deployment scenario. This is not limited herein.

In a specific embodiment, a memory 8012 and a memory 8024 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM) or a compact disc read-only memory (compact disc read-only memory, CD-ROM) or another compact disc storage, optical disc storage (including a compressed optical disc, a laser disc, an optical disc, a digital versatile optical disc, and a Blu-ray disc), a magnetic disk, or another magnetic storage device, or any another medium that can be used to carry or store desired program code in the form of an instruction or a data structure and that can be accessed by a computer, but not limited thereto. The memory 8024 in the interface board 802 may exist independently, and is connected to the central processing unit 8021 through a communication bus. Alternatively, the memory 8024 may be integrated with the central processing unit 8021. The memory 8012 in the main control board 801 may exist independently, and is connected to the central processing unit 8011 through the communication bus. Alternatively, the memory 8012 may be integrated with the central processing unit 8011.

The memory 8024 is configured to store program code, and the program code is controlled and executed by the central processing unit 8021, to perform the packet forwarding method provided in the foregoing embodiment. The central processing unit 8021 is configured to execute the program code stored in the memory 8024. The program code may include one or more software modules. The one or more software modules may be functional modules provided in the embodiment shown in any one of FIG. 12 to FIG. 15.

In a specific embodiment, the physical interface card 8023 may be any apparatus such as a transceiver, and is configured to communicate with another device or a communication network, for example, an Ethernet, a radio access network (radio access network, RAN), or a wireless local area network (wireless local area network, WLAN).

Embodiments of this application further provide a computer-readable storage medium. The computer-readable storage medium stores instructions, and the instructions are executed by a processor to implement the packet forwarding method that is performed by the first node, the second node, or the third node and that is provided in the foregoing method embodiment.

Embodiments of this application further provide a computer program product including instructions. When the computer program product is run on a computer, the computer is enabled to perform the packet forwarding method that is performed by the first node, the second node, or the third node and that is provided in the foregoing method embodiment.

Embodiments of this application further provide a packet forwarding system. As shown in FIG. 1, the packet forwarding system includes: a plurality of nodes 01. At least two of the plurality of nodes 01 may include the apparatus shown in FIG. 12, and at least one of the plurality of nodes 01 may include the apparatus shown in FIG. 13.

Embodiments of this application further provide another packet forwarding system. As shown in FIG. 1, the packet forwarding system includes: a plurality of nodes 01. The at least one of the plurality of nodes 01 may include the apparatus shown in FIG. 14, and the at least one of the plurality of nodes 01 may include the apparatus shown in FIG. 15.

It may be understood that in the packet forwarding system provided in embodiments of this application, the at least one node 01 may include the apparatuses shown in at least two accompanying drawings in FIG. 12, FIG. 13, FIG. 14, and FIG. 15. In other words, the at least one node 01 may have at least one of the following functions: encapsulating a behavior instruction into a packet, executing a first forwarding behavior based on a behavior in the packet, sending configuration information, and generating a forwarding table based on the received configuration information.

It may be further understood that the at least one of the plurality of nodes 01 may further include the apparatus shown in FIG. 16 or FIG. 17. The packet forwarding system may be an SRv6 system, or may be an MPLS SR system.

Embodiments of this application further provide a chip. The chip may be configured to implement the packet forwarding method performed by the first node, the second node, or the third node according to the foregoing method embodiment.

All or some of the foregoing embodiments may be implemented using software, hardware, firmware, or any combination thereof. When software is used to implement embodiments, the foregoing embodiments may be implemented completely or partially in a form of a computer program product. The computer program product includes one or more computer instructions. When the computer program instructions are loaded or executed on a computer, all or some of the processes or the functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive (solid-state drive, SSD).

The term "at least one" in this application means one or more, and the term "a plurality of" in this application means two or more. For example, a plurality of nodes means two or more nodes. Terms "system" and "network" may be used interchangeably in this specification. The "and/or" mentioned in this specification indicates that three relationships may exist. For example, A and/or B may indicate: the following three cases: Only A exists, both A and B exist, and only B exists. The character "/" generally indicates an "or" relationship between the associated objects.

The foregoing descriptions are merely optional implementations of this application, but the protection scope of this application is not limited thereto. Any equivalent modification or replacement readily figured out by a person skilled in the art within the technical scope disclosed in this application shall fall within the protection scope of this application. Therefore, the protection scope of this application shall be subject to the protection scope of the claims.

## Claims

1. A packet forwarding method, applied to a first node in a packet forwarding system, and comprising:
receiving a packet, wherein the packet comprises a destination address and a behavior instruction; and
forwarding, based on a first forwarding behavior indicated by the behavior instruction, the packet to a node indicated by the destination address, wherein
the packet forwarding system comprises a plurality of nodes, at least two of the plurality of nodes can perform the first forwarding behavior on the packet based on the behavior instruction in the packet, and the first node belongs to the at least two nodes.

2. The method according to claim 1, wherein the behavior instruction comprises a first function field, and the first function field indicates the first forwarding behavior.

3. The method according to claim 1, wherein the behavior instruction comprises a first function field, the destination address comprises a second function field, the first function field indicates the first forwarding behavior, and the second function field indicates a second forwarding behavior; and the forwarding, based on a first forwarding behavior indicated by the behavior instruction, the packet to a node indicated by the destination address comprises:
forwarding, based on the first forwarding behavior indicated by the first function field and the second forwarding behavior indicated by the second function field, the packet to the node indicated by the destination address.

4. The method according to claim 2 or 3, wherein the behavior instruction further comprises at least one of a locator field and a parameter field; and
the locator field indicates an aggregation address of the packet forwarding system, and the parameter field indicates an execution parameter of the first forwarding behavior.

5. The method according to any one of claims 1 to 4, wherein the first forwarding behavior comprises at least one of the following behaviors:
encrypted forwarding;
slice resource forwarding based on a specified network slice;
forwarding based on an allocated network resource; and
forwarding based on a specified routing table.

6. The method according to any one of claims 1 to 5, wherein
the packet is a segment routing packet based on internet protocol version 6 IPv6, and an IPv6 header, a segment routing header SRH, or a hop-by-hop option header of the packet carries the behavior instruction; or
the packet is a segment routing packet based on multi-protocol label switching, and a label stack of the packet carries the behavior instruction.

7. The method according to claim 6, wherein the SRH comprises a tag field; and the tag field carries the behavior instruction.

8. The method according to claim 6, wherein the SRH comprises a flags field and a segment list, and the segment list comprises a plurality of identification fields; and
the last identification field in the segment list carries the behavior instruction, and the flags field indicates that a value of the last identification field comprises the behavior instruction.

9. The method according to any one of claims 1 to 8, wherein the at least two nodes each store a forwarding table, and the forwarding table records a correspondence between the behavior instruction and the first forwarding behavior; and the method further comprises:
determining, based on the forwarding table, the first forwarding behavior indicated by the behavior instruction.

10. The method according to claim 9, wherein the method further comprises:
generating the forwarding table based on obtained configuration information, wherein
the configuration information comprises the behavior instruction and the first forwarding behavior.

11. The method according to any one of claims 1 to 10, wherein a length of the behavior instruction is less than 128 bits.

12. A packet forwarding method, applied to a second node in a packet forwarding system, and comprising:
encapsulating a behavior instruction into a packet, wherein the packet comprises a destination address field; and
sending the packet, so that at least two nodes in the packet forwarding system forward, based on a first forwarding behavior indicated by the behavior instruction in the packet, the packet to a node indicated by a value of the destination address field.

13. The method according to claim 12, wherein the behavior instruction comprises a first function field, and the first function field indicates the first forwarding behavior.

14. The method according to claim 12, wherein the behavior instruction comprises a first function field, the packet further comprises a segment list corresponding to a forwarding path of the packet, the segment list comprises a plurality of segment identifiers, each of the plurality of segment identifiers further comprises a second function field, the first function field indicates the first forwarding behavior, and the second function field indicates a second forwarding behavior; and
that at least two nodes in the packet forwarding system forward, based on a first forwarding behavior indicated by the behavior instruction in the packet, the packet to a node indicated by a value of the destination address field comprises:
the at least two nodes in the packet forwarding system forward, based on the first forwarding behavior indicated by the first function field and the second forwarding behavior indicated by the second function field, the packet to the node indicated by the value of the destination address field.

15. The method according to claim 13 or 14, wherein the behavior instruction further comprises at least one of a locator field and a parameter field; and
the locator field indicates an aggregation address of the packet forwarding system, and the parameter field indicates an execution parameter of the first forwarding behavior.

16. The method according to any one of claims 12 to 15, wherein the first forwarding behavior comprises at least one of the following behaviors:
encrypted forwarding;
slice resource forwarding based on a specified network slice;
forwarding based on an allocated network resource; and
forwarding based on a specified routing table.

17. The method according to any one of claims 12 to 16, wherein
the packet is a segment routing packet based on internet protocol version 6 IPv6, and an IPv6 header, a segment routing header SRH, or a hop-by-hop option header of the packet carries the behavior instruction; or
the packet is a segment routing packet based on multi-protocol label switching, and a label stack of the packet carries the behavior instruction.

18. The method according to claim 17, wherein the SRH comprises a tag field; and
the tag field carries the behavior instruction.

19. The method according to claim 17, wherein the SRH comprises a flags field and a segment list, and the segment list comprises a plurality of identification fields; and
the last identification field in the segment list carries the behavior instruction, and the flags field indicates that an identifier carried in the last identification field is the behavior instruction.

20. The method according to any one of claims 12 to 19, wherein a length of the behavior instruction is less than 128 bits.

21. A packet forwarding method, applied to a third node in a packet forwarding system, and comprising:
sending configuration information to at least one node in the packet forwarding system, wherein the configuration information comprises a behavior instruction and a first forwarding behavior corresponding to the behavior instruction, and the configuration information is used by at least two nodes in the packet forwarding system to generate a forwarding table, and perform, based on the forwarding table, the first forwarding behavior on a received packet into which the behavior instruction is encapsulated, wherein
the third node belongs to the at least two nodes.

22. The method according to claim 21, wherein the behavior instruction comprises a first function field, and the first function field indicates the first forwarding behavior.

23. The method according to claim 21, wherein the behavior instruction comprises a first function field, the packet into which the behavior instruction is encapsulated further comprises a segment list corresponding to a forwarding path of the packet, the segment list comprises a plurality of segment identifiers, each of the plurality of segment identifiers further comprises a second function field, the first function field indicates the first forwarding behavior, and the second function field indicates a second forwarding behavior; and
the at least two nodes can generate the forwarding table based on the configuration information and the second function field, and perform, based on the forwarding table, the first forwarding behavior and the second forwarding behavior on the received packet into which the behavior instruction is encapsulated.

24. The method according to claim 22 or 23, wherein the behavior instruction further comprises at least one of a locator field and a parameter field; and
the locator field indicates an aggregation address of the packet forwarding system, and the parameter field indicates an execution parameter of the first forwarding behavior.

25. The method according to any one of claims 21 to 24, wherein the first forwarding behavior comprises at least one of the following behaviors:
encrypted forwarding;
slice resource forwarding based on a specified network slice;
forwarding based on an allocated network resource; and
forwarding based on a specified routing table.

26. A packet forwarding method, applied to a first node in a packet forwarding system, and comprising:
receiving configuration information, wherein the configuration information comprises a behavior instruction and a first forwarding behavior corresponding to the behavior instruction; and
generating a forwarding table based on the configuration information, to perform, based on the forwarding table, the first forwarding behavior on a received packet into which the behavior instruction is encapsulated, wherein
the packet forwarding system comprises a plurality of nodes, at least two of the plurality of nodes can generate the forwarding table based on the configuration information, and the first node belongs to the at least two nodes.

27. The method according to claim 26, wherein the behavior instruction comprises a first function field, and the first function field indicates the first forwarding behavior.

28. The method according to claim 26, wherein the behavior instruction comprises a first function field, the packet into which the behavior instruction is encapsulated further comprises a segment list corresponding to a forwarding path of the packet, the segment list comprises a plurality of segment identifiers, each of the plurality of segment identifiers further comprises a second function field, the first function field indicates the first forwarding behavior, and the second function field indicates a second forwarding behavior; and
the generating a forwarding table based on the configuration information, to perform, based on the forwarding table, the first forwarding behavior on a received packet into which the behavior instruction is encapsulated comprises:
generating the forwarding table based on the configuration information and the second function field, to perform, based on the forwarding table, the first forwarding behavior and the second forwarding behavior, on the received packet into which the behavior instruction is encapsulated.

29. The method according to claim 27 or 28, wherein the behavior instruction further comprises at least one of a locator field and a parameter field; and
the locator field indicates an aggregation address of the packet forwarding system, and the parameter field indicates an execution parameter of the first forwarding behavior.

30. The method according to any one of claims 26 to 29, wherein the first forwarding behavior comprises at least one of the following behaviors:
encrypted forwarding;
slice resource forwarding based on a specified network slice;
forwarding based on an allocated network resource; and
forwarding based on a specified routing table.

31. A packet forwarding apparatus, used in a first node in a packet forwarding system, and comprising:
a receiving module, configured to receive a packet, wherein the packet comprises a destination address and a behavior instruction; and
a forwarding module, configured to forward, based on a first forwarding behavior indicated by the behavior instruction, the packet to a node indicated by the destination address, wherein
the packet forwarding system comprises a plurality of nodes, at least two of the plurality of nodes can perform the first forwarding behavior on the packet based on the behavior instruction in the packet, and the first node belongs to the at least two nodes.

32. The apparatus according to claim 31, wherein the behavior instruction comprises a first function field, and the first function field indicates the first forwarding behavior.

33. The apparatus according to claim 31, wherein the behavior instruction comprises a first function field, the destination address comprises a second function field, the first function field indicates the first forwarding behavior, and the second function field indicates a second forwarding behavior; and the forwarding module is configured to:
forward, based on the first forwarding behavior indicated by the first function field and the second forwarding behavior indicated by the second function field, the packet to the node indicated by the destination address.

34. The apparatus according to claim 32 or 33, wherein the behavior instruction further comprises at least one of a locator field and a parameter field; and
the locator field indicates an aggregation address of the packet forwarding system, and the parameter field indicates an execution parameter of the first forwarding behavior.

35. The apparatus according to any one of claims 31 to 34, wherein the first forwarding behavior comprises at least one of the following behaviors:
encrypted forwarding;
slice resource forwarding based on a specified network slice;
forwarding based on an allocated network resource; and
forwarding based on a specified routing table.

36. The apparatus according to any one of claims 31 to 35, wherein
the packet is a segment routing packet based on internet protocol version 6 IPv6, and an IPv6 header, a segment routing header SRH, or a hop-by-hop option header of the packet carries the behavior instruction; or
the packet is a segment routing packet based on multi-protocol label switching, and a label stack of the packet carries the behavior instruction.

37. The apparatus according to claim 36, wherein the SRH comprises a tag field; and the tag field carries the behavior instruction.

38. The apparatus according to claim 36, wherein the SRH comprises a flags field and a segment list, and the segment list comprises a plurality of identification fields; and
the last identification field in the segment list carries the behavior instruction, and the flags field indicates that a value of the last identification field comprises the behavior instruction.

39. The apparatus according to any one of claims 31 to 38, wherein the at least two nodes each store a forwarding table, and the forwarding table records a correspondence between the behavior instruction and the first forwarding behavior; and the apparatus further comprises:
a determining module, configured to determine, based on the forwarding table, the first forwarding behavior indicated by the behavior instruction.

40. The apparatus according to claim 39, wherein the apparatus further comprises:
a generation module, configured to generate the forwarding table based on obtained configuration information, wherein the configuration information comprises the behavior instruction and the first forwarding behavior.

41. The apparatus according to any one of claims 31 to 40, wherein a length of the behavior instruction is less than 128 bits.

42. A packet forwarding apparatus, used in a second node in a packet forwarding system, and comprising:
an encapsulation module, configured to encapsulate a behavior instruction into a packet, wherein the packet comprises a destination address field; and
a sending module, configured to send the packet, so that at least two nodes in the packet forwarding system forward, based on a first forwarding behavior indicated by the behavior instruction in the packet, the packet to a node indicated by a value of the destination address field.

43. The apparatus according to claim 42, wherein the behavior instruction comprises a first function field, and the first function field indicates the first forwarding behavior.

44. The apparatus according to claim 42, wherein the behavior instruction comprises a first function field, the packet further comprises a segment list corresponding to a forwarding path of the packet, the segment list comprises a plurality of segment identifiers, each of the plurality of segment identifiers further comprises a second function field, the first function field indicates the first forwarding behavior, and the second function field indicates a second forwarding behavior; and
the at least two nodes can forward, based on the first forwarding behavior indicated by the first function field and the second forwarding behavior indicated by the second function field, the packet to the node indicated by the value of the destination address field.

45. The apparatus according to claim 43 or 44, wherein the behavior instruction further comprises at least one of a locator field and a parameter field; and
the locator field indicates an aggregation address of the packet forwarding system, and the parameter field indicates an execution parameter of the first forwarding behavior.

46. The apparatus according to any one of claims 42 to 45, wherein the first forwarding behavior comprises at least one of the following behaviors:
encrypted forwarding;
slice resource forwarding based on a specified network slice;
forwarding based on an allocated network resource; and
forwarding based on a specified routing table.

47. The apparatus according to any one of claims 42 to 46, wherein the packet is a segment routing packet based on internet protocol version 6 IPv6, and an IPv6 header, a segment routing header SRH, or a hop-by-hop option header of the packet carries the behavior instruction; or
the packet is a segment routing packet based on multi-protocol label switching, and a label stack of the packet carries the behavior instruction.

48. The apparatus according to claim 47, wherein the SRH comprises a tag field; and
the tag field carries the behavior instruction.

49. The apparatus according to claim 47, wherein the SRH comprises a flags field and a segment list, and the segment list comprises a plurality of identification fields; and
the last identification field in the segment list carries the behavior instruction, and the flags field indicates that an identifier carried in the last identification field is the behavior instruction.

50. The apparatus according to any one of claims 42 to 49, wherein a length of the behavior instruction is less than 128 bits.

51. A packet forwarding apparatus, used in a third node in a packet forwarding system, and comprising:
a sending module, configured to send configuration information to at least one node in the packet forwarding system, wherein the configuration information comprises a behavior instruction and a first forwarding behavior corresponding to the behavior instruction, and the configuration information is used by at least two nodes in the packet forwarding system to generate a forwarding table, and perform, based on the forwarding table, the first forwarding behavior on a received packet into which the behavior instruction is encapsulated, wherein
the third node belongs to the at least two nodes.

52. The apparatus according to claim 51, wherein the behavior instruction comprises a first function field, and the first function field indicates the first forwarding behavior.

53. The apparatus according to claim 51, wherein the behavior instruction comprises a first function field, the packet into which the behavior instruction is encapsulated further comprises a segment list corresponding to a forwarding path of the packet, the segment list comprises a plurality of segment identifiers, each of the plurality of segment identifiers further comprises a second function field, the first function field indicates the first forwarding behavior, and the second function field indicates a second forwarding behavior; and
the at least two nodes can generate the forwarding table based on the configuration information and the second function field, and perform, based on the forwarding table, the first forwarding behavior and the second forwarding behavior on the received packet into which the behavior instruction is encapsulated.

54. The apparatus according to claim 52 or 53, wherein the behavior instruction further comprises at least one of a locator field and a parameter field; and
the locator field indicates an aggregation address of the packet forwarding system, and the parameter field indicates an execution parameter of the first forwarding behavior.

55. The apparatus according to any one of claims 51 to 54, wherein the first forwarding behavior comprises at least one of the following behaviors:
encrypted forwarding;
slice resource forwarding based on a specified network slice;
forwarding based on an allocated network resource; and
forwarding based on a specified routing table.

56. A packet forwarding apparatus, used in a first node in a packet forwarding system, and comprising:
a receiving module, configured to receive configuration information, wherein the configuration information comprises a behavior instruction and a first forwarding behavior corresponding to the behavior instruction; and
a generation module, configured to generate a forwarding table based on the configuration information, to perform, based on the forwarding table, the first forwarding behavior on a received packet into which the behavior instruction is encapsulated, wherein
the packet forwarding system comprises a plurality of nodes, at least two of the plurality of nodes can generate the forwarding table based on the configuration information, and the first node belongs to the at least two nodes.

57. The apparatus according to claim 56, wherein the behavior instruction comprises a first function field, and the first function field indicates the first forwarding behavior.

58. The apparatus according to claim 56, wherein the behavior instruction comprises a first function field, the packet into which the behavior instruction is encapsulated further comprises a segment list corresponding to a forwarding path of the packet, the segment list comprises a plurality of segment identifiers, each of the plurality of segment identifiers further comprises a second function field, the first function field indicates the first forwarding behavior, and the second function field indicates a second forwarding behavior; and
the generation module is configured to generate the forwarding table based on the configuration information and the second function field, to perform, based on the forwarding table, the first forwarding behavior and the second forwarding behavior, on the received packet into which the behavior instruction is encapsulated.

59. The apparatus according to claim 57 or 58, wherein the behavior instruction further comprises at least one of a locator field and a parameter field; and
the locator field indicates an aggregation address of the packet forwarding system, and the parameter field indicates an execution parameter of the first forwarding behavior.

60. The apparatus according to any one of claims 56 to 59, wherein the first forwarding behavior comprises at least one of the following behaviors:
encrypted forwarding;
slice resource forwarding based on a specified network slice;
forwarding based on an allocated network resource; and
forwarding based on a specified routing table.

61. A computer-readable storage medium, wherein the computer-readable storage medium stores instructions, and the instructions are executed by a processor to implement the method according to any one of claims 1 to 30.

62. A packet forwarding system, wherein the packet forwarding system comprises a plurality of nodes; and
at least two of the plurality of nodes comprise the apparatus according to any one of claims 31 to 41, and at least one of the plurality of nodes comprises the apparatus according to any one of claims 42 to 50.

63. A packet forwarding system, wherein the packet forwarding system comprises a plurality of nodes; and
at least one of the plurality of nodes comprises the apparatus according to any one of claims 51 to 55, and at least one of the plurality of nodes comprises the apparatus according to any one of claims 56 to 60.

64. A computer program product, wherein the computer program product comprises instructions, and when the computer program product is run on a computer, the computer is enabled to perform the method according to any one of claims 1 to 30.
